(19) **Europäisches Patentamt European Patent Office Office européen des brevets**

(11) **EP 3 577 938 B1**

(12) **EUROPEAN PATENT SPECIFICATION**

(45) Date of publication and mention
of the grant of the patent:
**30.03.2022 Bulletin 2022/13**

(21) Application number: **17895442.6**

(22) Date of filing: **20.12.2017**

(51) International Patent Classification (IPC):
*H04W 24/10* (2009.01)          *H04W 16/00* (2009.01)

(52) Cooperative Patent Classification (CPC):
**H04W 24/10**

(86) International application number:
**PCT/SE2017/051322**

(87) International publication number:
**WO 2018/143853 (09.08.2018 Gazette 2018/32)**

(54) **METHODS FOR DETERMINING REPORTING CONFIGURATION BASED ON UE POWER CLASS**

VERFAHREN ZUR BESTIMMUNG DER MELDEKONFIGURATION AUF BASIS DER BENUTZERGERÄTELEISTUNGSKLASSE

PROCÉDÉS POUR DÉTERMINER UNE CONFIGURATION DE RAPPORT SUR LA BASE D'UNE CLASSE DE PUISSANCE D'UE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.02.2017 US 201762454290 P**

(43) Date of publication of application:
**11.12.2019 Bulletin 2019/50**

(73) Proprietor: **Telefonaktiebolaget LM Ericsson (PUBL)**
**164 83 Stockholm (SE)**

(72) Inventors:
• **THANGARASA, Santhan**
  **SE-162 44 Vällingby (SE)**
• **KAZMI, Muhammad**
  **SE-174 64 Sundbyberg (SE)**
• **AXMON, Joakim**
  **SE-216 31 Limhamn (SE)**

(74) Representative: **Ericsson**
**Patent Development**
**Torshamnsgatan 21-23**
**164 80 Stockholm (SE)**

(56) References cited:
EP-A1- 2 605 597     EP-A1- 2 919 534
EP-A1- 3 091 809     WO-A1-2017/220635

• **ERICSSON: "RRM requirements for Rel-13 MTC due to new UE power class", 3GPP DRAFT; R4-156309, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Sophia Antipolis, France; 20151012 - 20151016 12 October 2015 (2015-10-12), XP051009278, Retrieved from the Internet: URL:http://www.3gpp.org/ftp/Meetings_3GPP_ SYNC/RAN4/Docs/ [retrieved on 2015-10-12]**
• **HUAWEI: "Correction of power headroom report mapping", 3GPP DRAFT; R4-103610, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Xian; 20101011, 7 October 2010 (2010-10-07), XP050455300, [retrieved on 2010-10-07]**
• **ERICSSON: "Further reduced power class in NB-IoT", 3GPP DRAFT; R2-165157 FURTHER REDUCED POWER CLASS IN NB-IOT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Gothenburg, Sweden; 20160822 - 20160826 13 August 2016 (2016-08-13), XP051134145, Retrieved from the Internet: URL:http://www.3gpp.org/ftp/tsg_ran/WG2_RL 2/TSGR2_95/Docs/ [retrieved on 2016-08-13]**

- **ERICSSON: "PHR reporting for NB-IOT low-power class UEs", 3GPP DRAFT; R4-1701547, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Athens, Greece; 20170213 - 20170217 3 February 2017 (2017-02-03), XP051225343, Retrieved from the Internet: URL:http://www.3gpp.org/ftp/tsg_ran/WG4_Radio/TSGR4_82/Docs/ [retrieved on 2017-02-03]**
- **Ericsson: "Further reduced power class in NB-IoT", 3GPP Draft; R2-165157, Mobile Competence Centre, 21 August 2016 (2016-08-21), XP051126771, 650, route des Lucioles ; F-06921 Sophia-Antipolis Cedex ; France**
- **Ericsson: "PHR reporting for NB-IOT low-power class UEs", 3GPP Draft; R4-1703126 &#8203, 3 April 2017 (2017-04-03), XP051246339, 650, route des Lucioles ; F-06921 Sophia-Antipolis Cedex ; France**

**Description**

TECHNICAL FIELD

The present disclosure relates to wireless communication and in particular to a base station and a UE, as well as respective methods performed thereby, for determining a reporting configuration.

BACKGROUND

*Machine Type Communication (MTC)*

The machine-to-machine (M2M) communication, or aka machine type communication (MTC), may be used for establishing communication between machines, and between machines and humans. The communication may comprise exchange of data, signalling, measurement data, configuration information etc. The device size may vary from that of a wallet to that of a base station. The M2M devices may be quite often used for applications like sensing environmental conditions, e.g. temperature reading, metering or measurement, e.g., electricity usage etc..., fault finding or error detection etc. In these applications, the M2M devices may be active very seldom but over a consecutive duration depending upon the type of service, e.g., about 200 ms once every 2 seconds, about 500 ms every 60 minutes etc... The M2M device may also do measurements on other frequencies or other Radio Access Technologies (RATs).

*Low complexity UE*

In this disclosure, the terms User Equipment (UE) and wireless device are used. It is pointed out that when UE is used, it may be replaced by a wireless device. A wireless device may be any of a mobile telephone, smartphone, laptop, Personal Digital Assistant (PDA) or any other equipment comprising means for radio communication. The MTC device may be expected to be of low cost and low complexity. A low complexity UE envisaged for M2M operation may implement one or more low cost features like, smaller downlink and uplink maximum transport block size, e.g., 1000 bits, and/or reduced downlink channel bandwidth of 1.4 MHz for data channel, e.g., Physical Downlink Shared CHannel (PDSCH). A low cost UE may also comprise a Half-Duplex Frequency Division Duplex (HD-FDD) and one or more of the following additional features, single receiver (1 Rx) at the UE, smaller downlink and/or uplink maximum transport block size, e.g., 1000 bits, and reduced downlink channel bandwidth of 1.4 MHz for data channel. The low cost UE may also be termed as low complexity UE.

*Coverage enhancement in machine type communication*

The path loss between an M2M device and the base station, in this disclosure also referred to as a node or a network node, may be very large in some scenarios such as when used as a sensor or metering device located in a remote location such as in the basement of a building. In such scenarios, the reception of signal from base station is very challenging. For example, the path loss may be worse than 20 dB compared to normal operation. In order to cope with such challenges, the coverage in uplink and/or in downlink may have to be substantially enhanced. This may be realized by employing one or a plurality of advanced techniques in the UE and/or in the radio network node for enhancing the coverage. Some non-limiting examples of such advanced techniques may be, but not limited to, transmit power boosting, repetition of transmitted signal, applying additional redundancy to the transmitted signal, use of advanced/enhanced receiver etc. In general, when employing such coverage enhancing techniques, the M2M may be regarded to be operating in 'coverage enhancing' mode.
A low complexity UE, e.g., UE with 1 Rx, may also be capable of supporting enhanced coverage mode of operation.

*UE measurements in MBB Long-Term Evolution (LTE) and NB-IOT*

Radio measurements done by the UE may be typically performed on the serving as well as on neighbour cells, e.g., Narrow Band (NB) cells, NB Physical Resource Block (PRB) etc, over some known reference symbols or pilot sequences e.g. Narrow Band Cell Specific Reference Signal (NB-CRS), Narrow Band Secondary Synchronization Signal (NB-SSS), Narrow Band Primary Synchronization Signal (NB-PSS) etc. The measurements may be done on cells on an intra-frequency carrier, on inter-frequency carrier(s), as well as on inter-RAT carriers(s), depending upon the UE capability whether it supports that RAT. To enable inter-frequency and inter-RAT measurements for the UE requiring gaps, the network may have to configure the measurement gaps.
The measurements may be done for various purposes. Some example measurement purposes may be: mobility, positioning, self-organizing network (SON), minimization of drive tests (MDT), operation and maintenance (O&M), network planning and optimization etc. Examples of measurements in LTE are Cell identification aka Physical cell identity (PCI) acquisition, Reference Symbol Received Power (RSRP), Reference Symbol Received Quality (RSRQ), cell global ID (CGI) acquisition, Reference Signal Time Difference (RSTD), UE Receiver (RX) - Transmitter (TX) time difference measurement, Radio Link Monitoring (RLM), which consists of Out of Synchronization (out of sync) detection and In Synchronization (in-sync) detection etc. Channel State Information (CSI) measurements performed by the UE are used for scheduling, link adaptation etc. by network. Examples of CSI measurements or CSI reports are Channel Quality Indicator (CQI), Precoding Matrix Indicator (PMI), Rank Indication (RI) etc. They may be performed on reference signals like Cell Specific Reference Signal (CRS), CSI Reference Signals (CSI-RS) or DeModulation Reference Signals (DMRS).

In order to identify an unknown cell, e.g., a new neighbour cell, the UE may have to acquire the timing of that cell and eventually the Physical Cell ID (PCI). In legacy LTE operation, the Downlink (DL) subframe # 0 and subframe # 5 may carry synchronization signals, i.e., both PSS and SSS. The synchronization signals used for Narrow Band Internet of Things (NB-IoT) may be known as NB-PSS and NB-SSS and their periodicity may be different from the LTE legacy synchronization signals. This may be called cell search or cell identification. Subsequently, the UE may also measure RSRP and/or RSRQ of the newly identified cell in order to use itself and/or report the measurement to the network node. In total, there are 504 PCIs in a NB-IoT RAT. The cell search may also be a type of measurement. The measurements may be done in all Radio resource control (RRC) states i.e. in RRC idle and connected states. In RRC connected state, the measurements may be used by the UE for one or more tasks such as for reporting the results to the network node. In RRC idle, the measurements may be used by the UE for one or more tasks such as for cell selection, cell reselection etc.

*Narrow Band Internet of Things (NB-IoT)*

The objective of Narrow Band Internet of Things (NB-IoT) may be understood as to specify a radio access for cellular internet of things (IoT), based to a great extent on a non-backward-compatible variant of Evolved Universal Terrestrial Radio Access (E-UTRA), that addresses improved indoor coverage, support for massive number of low throughput devices, low delay sensitivity, ultra-low device cost, low device power consumption and (optimized) network architecture.

The NB-IoT carrier Bandwidth (BW) (Bw2) may be 200 KHz. Examples of operating bandwidth (Bw1) of LTE may be 1.4 MHz, 3 MHz, 5 MHz, 10 MHz, 15 MHz, 20 MHz etc.

NB-IoT may support 3 different deployment scenarios:

1. 'Stand-alone operation', utilising, for example, the spectrum currently being used by Global System for Mobile communications (GSM) Enhanced Data rates for GSM Evolution Radio Access Network Radio Access Network (GERAN) systems as a replacement of one or more GSM carriers. In principle, it may operate on any carrier frequency which is neither within the carrier of another system not within the guard band of another system's operating carrier. The other system may be another NB-IoT operation or any other RAT e.g. LTE.

2. 'Guard band operation', utilising the unused resource blocks within a LTE carrier's guard-band. The term guard band may also be interchangeably called guard bandwidth. As an example, in case of LTE BW of 20 MHz, i.e., Bw1= 20 MHz or 100 RBs, the guard band operation of NB-IoT may take place anywhere outside the central 18 MHz, but within 20 MHz LTE BW.

3. 'In-band operation', utilising resource blocks within a normal LTE carrier. The in-band operation may also be interchangeably called inbandwidth operation. More generally, the operation of one RAT within the BW of another RAT may also be called in-band operation. As an example, in an LTE BW of 50 RBs (i.e. Bw1= 10 MHz or 50 RBs), NB-IOT operation over one resource block (RB) within the 50 RBs is called in-band operation.

In NB-IoT, the downlink transmission may be based on Orthogonal Frequency Division Multiplexing (OFDM) with 15 kHz subcarrier spacing and same symbol and cyclic prefix durations as for legacy LTE for all the scenarios: standalone, guard-band, and in-band.

For UL transmission, both multi-tone transmissions based with a 15 kHz subcarrier spacing on Single-Carrier Frequency Division Multiple Access (SC-FDMA), and single tone transmission, with either 3.75 kHz or 15 kHz subcarrier spacing, may be supported.

This means that the physical waveforms for NB-IoT in downlink, and also partly in uplink, may be similar to legacy LTE.

In the downlink design, NB-IoT may support both master information broadcast and system information broadcast, which may be carried by different physical channels. For in-band operation, it may be possible for NB-IoT UE to decode Narrowband Physical Broadcast Channel (NPBCH) without knowing the legacy Physical Resource Block (PRB) index. NB-IoT supports both Narrowband Physical Downlink Control Channel (NPDCCH) and Narrowband Physical Downlink Shared channel (NPDSCH). The operation mode of NB-IoT may need to be indicated to the UE, and currently, 3GPP considers indication by means of Narrowband Secondary Synchronization Signal (NSSS), Narrowband Master Information Block (NB-MIB) or perhaps other downlink signals.

NB-IoT reference signals (NRS) may be separate from the legacy LTE CRS, but the design principle is similar; they may typically not overlap with legacy CRS or Physical Downlink Control Channel (PDCCH), they may be turned off in subframes when NPDSCH/Narrowband Physical Shared Control Channel (NPSCCH) is not transmitted, and the subcarriers used may be derived from PCI. .. Downlink synchronisation signals may consist of Narrowband Primary Synchronization Signal (NPSS), transmitted in subframe #5 in every radio frame, and Narrowband Secondary Synchronization Signal (NSSS), transmitted in subframe #9 but periodicity is For Further Study (FFS).

It has been agreed to support multi-Physical Resource Block (PRB) operation in Rel-13. In this case, NPSS, NSSS, Physical Broadcast CHannel (PBCH) and system information may only be broadcasted on one or more anchor-PRB(s), and upon connection setup, UEs may assign to carry out their connected sessions on other "secondary-PRBs" not containing these signals. UEs may therefore monitor paging and perform Random Access and RRC Connection Setup on the anchor carrier, transmit user plane data on the secondary-PRB, and once released to RRC Idle mode, they may return to the anchor-PRB, unless directed elsewhere. Because of this, UE measurements based on the previously mentioned physical channels may not be performed on the secondary PRB.

Note that it is possible that the anchor-PRB and the secondary-PRB belong to different deployment scenarios. For example, the anchor-PRB may be in the guard band, whereas the secondary-PRB may be in-band, in which case there may only be NRS reference symbols available on the anchor-PRB, whereas both NRS and legacy CRS may be available on the secondary-PRB.

Further, some, but not all, PRBs may be power boosted for the in-band deployment scenario, and typically, the anchor-PRB may be power boosted to ensure good reception of NPSS, NSSS, PBCH, and NPDCCH.

The term anchor PRB may interchangeably be called primary PRB, basic Positioning Reference Signal (PRS), common signal PRS, main PRS etc. The term secondary PRB may interchangeably be called companion PRS, booster PRS, data PRS etc. The term PRB may interchangeably be called cell, NB cell, NB resource, Resource Block (RB), Virtual RB (VRB), physical resource etc.

*UE power class*

The UE power class may be understood to define the UE maximum output power for any transmission bandwidth within the channel bandwidth. It may also be interchangeably called nominal maximum output power, UE maximum transmit power etc. The UE maximum output power may be estimated over certain time period e.g., 1 subframe. In LTE, several UE power classes may be supported. Examples of UE power classes may be 31 dBm, a.k.a. power class 1 (PC1), 23 dBm, a.k.a. power class 3 (PC3), 20 dBm, a.k.a. power class 5 (PC5), and 14 dBm. For example, a NB-IoT UE may support PC3, PC5 and also 14 dBm. The same UE may support one or plurality of power classes, e.g., PC3 and PC5 for band 1 (2GHz) and band 8 (900 MHz), respectively.

The UE may indicate its supported power class(es) for different bands to the network via RRC message, i.e., *UE- Evolved Universal Terrestrial Radio Access (EUTRA)-Capability* information element.

The network may limit the maximum UE output below its nominal value, i.e., power class capability, by an RRC parameter called, p-Max. If the UE is not configured with p-Max, then the UE may apply the maximum power according to its UE capability.

The low complexity and low cost UEs have different characteristics compared to legacy UEs. These characteristics result in some limitations. One such limitation is that these UEs may have limited reporting capabilities compared to legacy UEs.

The reported measurements may be used by the network node for operational tasks e.g., scheduling, mobility, positioning etc. Hence, less accurate or less optimal scheduling decisions may be taken by the network node.

3GPP draft by Ericsson: "RRM requirements for Rel-13 MTC due to new UE power class", R4-156309, Sophia Antipolis, France; 20151012-20151016, describes that no impact is expected on RRM requirements due to the new power UE power class for Rel-13 LC/EC MRC UEs.

3GPP draft by Huawei: "Correction of power headroom report mapping", R4-103610, Xian; 20101011, describes a way to modify PHR mapping table in TS36.133 without bringing additional overhead, and the modified table can be reused in Rel-10.

3GPP draft by Ericsson: "Further reduced power class in NB-IoT", R2-165157, Gothenburg, Sweden; 20160822-20160826, describes potential RAN2 signalling impact of a further reduced power class in NB-IoT if introduced in REL-14.

**EP 3 577 938 B1**

SUMMARY

The object is to obviate at least some of the problems outlined above. In particular, it is an object to provide a wireless device (UE) and a network node (first node or base station) and respective methods performed thereby for determining a reporting configuration based on UE power class. These objects and others may be obtained by providing a wireless device (UE) and a method performed by a wireless device (UE) and a network node (first node or base station) and a method performed by a network node (first node or base station) as described herein.

According to a first aspect of embodiments herein, the object is achieved by a method, performed by a base station. The base station determines a reporting configuration for a UE to report power headroom to the base station. The determining is based on a power class of the UE. The reporting configuration comprises a plurality of reportable values, wherein each reportable value corresponds to a respective range of values of a power headroom. The respective range each reportable value corresponds to is a function of a power class of the UE. The base station receives, from the UE, a reportable value from the plurality of reportable values. The respective range of values of the power headroom indicated by the received reportable value is based on the determined reporting configuration.

According to a second aspect of embodiments herein, the object is achieved by a method, performed by the UE. The UE obtains the reporting configuration to report power headroom to the base station. The reporting configuration comprises the plurality of reportable values, wherein each reportable value corresponds to the respective range of values of the power headroom. The respective range of values of the power headroom each reportable value corresponds to is a function of the power class of the UE. The UE then transmits, to the base station, the reportable value from the plurality of reportable values.

According to a third aspect of embodiments herein, the object is achieved by the base station configured to determine the reporting configuration for the UE to report the power headroom to the base station. The determining is configured to be based on the power class of the UE. The reporting configuration comprises the plurality of reportable values, wherein each reportable value is configured to correspond to the respective range of values of the power headroom. The respective range each reportable value is configured to correspond to, is configured to be a function of the power class of the UE. The base station receives, from the UE, the reportable value from the plurality of reportable values. The respective range of values of the power headroom configured to be indicated by the reportable value configured to be received, is based on the reporting configuration configured to be determined.

According to a fourth aspect of embodiments herein, the object is achieved by the UE configured to obtain the reporting configuration to report power headroom to the base station. The reporting configuration comprises the plurality of reportable values, wherein each reportable value is configured to correspond to the respective range of values of the power headroom. The respective range of values of the power headroom each reportable value corresponds to, is configured to be a function of the power class of the UE. The UE transmits, to the base station, the reportable value from the plurality of reportable values.

The respective method and the UE and the base station have several possible advantages. One possible advantage is that the reported PHR may better reflect the power headroom available in the UE compared to the legacy solution. This may in turn improve the other procedures that use the result of the PHR reporting in the base station, e.g. a more suitable coding rate, modulation schemes and better resources that match the actual channel conditions are selected by the base station.

BRIEF DESCRIPTION OF DRAWINGS

Embodiments will now be described in more detail in relation to the accompanying drawings, in which:

Figure 1 is a schematic diagram illustrating two non-limiting examples, in panel a), and panel b), respectively, of a communication network, according to embodiments herein.

Figure 2 is a flowchart depicting a method in a base station, according to embodiments herein.

Figure 3 is a flowchart depicting a method in a UE, according to embodiments herein.

Figure 4 depicts in panel a) a block diagram of a UE according to an exemplifying embodiment, and in panel b) a block diagram of a UE according to another exemplifying embodiment.

Figure 5 is a block diagram of a base station according to an exemplifying embodiment.

Figure 6 is a block diagram of a base station according to another exemplifying embodiment.

6

Figure 7 is a block diagram of an arrangement in a UE according to an exemplifying embodiment.

Figure 8 is a block diagram of an arrangement in a base station according to an exemplifying embodiment.

DETAILED DESCRIPTION

As part of the development of embodiments herein, one or more problems with the existing technology will first be identified and discussed.

As stated earlier, low complexity and low cost UEs have different characteristics compared to legacy UEs, which result in some limitations. One such limitation is that these UEs may have limited reporting capabilities compared to legacy UEs. As an example, the NB-IoT UE may only have 2 bits that may be used for reporting the power headroom, and this may be compared to 6 bits for legacy LTE UEs. This means that the former UE may only report 4 different values, while the latter may report up to 64 values of power headroom.

Another problem with the current solution is that the current reporting resolution for release 13 NB-IoT was derived assuming 23 dBm transmitting power. Discussions are now ongoing to support lower power class, which means that the current reporting resolutions may not be efficient as they will not reflect the maximum transmitting power of the UE, but also the current reporting ranges may not work.

To illustrate the problem of existing methods more particularly, the current power headroom report mapping depends on the coverage mode of a UE. One type of reporting table is used when the UE is determined to be in normal coverage, see Table 1, and another table when the UE is in enhanced coverage, see Table 2. In each of these tables, the column on the right shows a measured PH of a UE in dB, while the column on the left shows the value the UE may report to a network node. The main difference between the tables is in the reporting ranges, that is, the lowest and the highest possible values that may be reported, and the reporting resolution.

**Table 1: Power headroom report mapping for UE category NB1 in normal coverage, according to existing methods**

| Reported value | Measured quantity value (dB) |
|---|---|
| POWER_HEADROOM_0 | $-23 \le PH < 5$ |
| POWER_HEADROOM_1 | $5 \le PH < 8$ |
| POWER_HEADROOM_2 | $8 \le PH < 11$ |
| POWER_HEADROOM_3 | $PH \ge 11$ |

**Table 2: NB-IoT power headroom report mapping in enhanced coverage, according to existing methods**

| Reported value | Measured quantity value (dB) |
|---|---|
| POWER_HEADROOM_0 | $-23 \le PH < -10$ |
| POWER_HEADROOM_1 | $-10 \le PH < -2$ |
| POWER_HEADROOM_2 | $-2 \le PH < 6$ |
| POWER_HEADROOM_3 | $PH \ge 6$ |

The power headroom report mapping tables above, Table 1 and Table 2, are derived assuming 23 dBm transmit power UEs, that is, the legacy type of UEs with power class 3. Tables 1 and 2 are indeed applicable for all the existing NB-IoT UE power classes, that is, power class 3 (23 dBm) and power class 5 (20 dBm). But, this reporting configuration may not work well for the low power class UEs, e.g., below 20 dBm, such as a 14 dBm UE.

Firstly, within a certain coverage mode, e.g., a normal coverage mode, the maximum power that may be used for power headroom reporting may be different than the current UEs. The lowest value that may be reported in Table 1 is -23 dBm. This means that the network may grant a UE to transmit signals using various Modulation and Coding Schemes (MCS), coding rate and resources, such that this limit in maximum transmit power is not exceeded.

However, a UE with a low power class cannot go down to this level. That is, the cap will be much higher.

Certain aspects of the present disclosure and their embodiments may provide solutions to this challenge or other challenges. There are, proposed herein, various embodiments which address one or more of the issues disclosed herein.

The embodiments described herein comprise a method that may be implemented in a UE and network node.

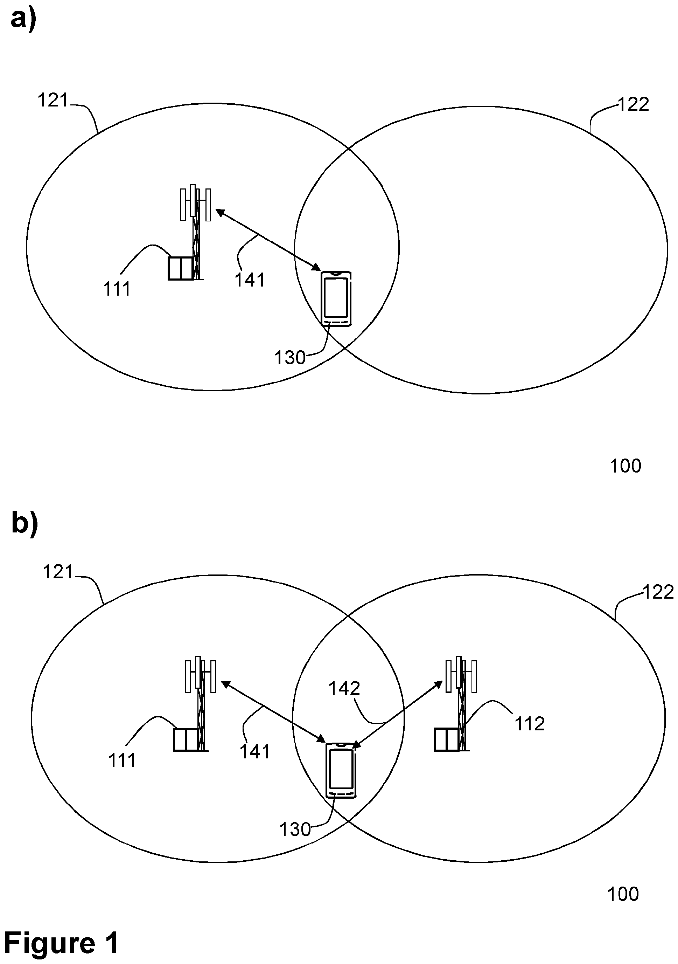

**Figure 1** depicts two non-limiting examples, in **Figure 1a** and **Figure 1b,** respectively, of a **communication network 100**, sometimes also referred to as a wireless communications network, wireless communications system, cellular radio system, or cellular network, in which embodiments herein may be implemented. The wireless communication network 100 may typically be a Long-Term Evolution (LTE) network. While the embodiments herein are described for LTE, the embodiments are applicable to any RAT or multi-RAT systems, where a UE may receive and/or transmit signals, e.g., data, e.g., LTE Frequency Division Duplex (FDD)/ Time Division Duplex (TDD), Wideband Code Division Multiple Access (WCDMA)/ High Speed Packet Access (HSPA), GSM/GERAN, Wi Fi, Wireless Local Area Network (WLAN), Code Division Multiple Access 2000 (CDMA2000) etc. The wireless communication network 100 may support other technologies such as, for example, e.g. LTE Half-Duplex Frequency Division Duplex (HD-FDD), LTE operating in Unlicensed Spectrum (LTE-U), also known as standalone-LTE network, MuLTEfire, 5G, or Next Gen System or network, Worldwide Interoperability for Microwave Access (WiMAX), Low Rate Wireless Personal Access Network (LR-WPAN) as defined in e.g. IEEE 802.15.4, a Zigbee network, Universal Terrestrial Radio Access (UTRA) TDD, Ultra-Mobile Broadband (UMB), EDGE network, network comprising of any combination of Radio Access Technologies (RATs) such as e.g. Multi-Standard Radio (MSR) base stations, multi-RAT base stations etc., any 3rd Generation Partnership Project (3GPP) cellular network, or any cellular network or system. Thus, although terminology LTE may be used in this disclosure to exemplify embodiments herein, this should not be seen as limiting the scope of the embodiments herein to only the aforementioned system. The communication network may also be understood as a non-cellular system, comprising network nodes which may serve receiving nodes, such as wireless devices, with serving beams. This may be a typical case, e.g., a in a 5G network.

The communication network 100 comprises a plurality of network nodes, whereof a first base station, referred to herein simply as **base station 111** is depicted in the non-limiting examples of Figure 1a and Figure 1b, and a second base station 112 is depicted in the non-limiting example of Figure 1b. In some embodiments, a more general term "network node" is used. The network node may interchangeably be called a radio network node or a base station. A network node may correspond to any type of radio network node or any network node, which communicates with a UE and/or with another network node. Examples of network nodes are NodeB, Master eNode B (MeNB), Secondary eNode B (SeNB), a network node belonging to Master Cell Group (MCG) or Secondary Cell Group (SCG), Base Station (BS), , radio base station, Multi-Standard Radio (MSR) radio node such as Multi-Standard Radio (MSR) BS, evolved Node B (eNodeB), network controller, Radio Network Controller (RNC), Base Station Controller (BSC), relay, relay node, donor node controlling relay, Base Transceiver Station (BTS), Access Point (AP), radio access point, transmission points, transmission nodes, Remote Radio Unit (RRU), Remote Radio Head (RRH), nodes in Distributed Antenna System (DAS), core network node, e.g., Mobile Switching Centre (MSC), Mobility Management Entity (MME), NodeG, etc., Operation and Maintenance (O&M), Operations Support Systems (OSS), SON, positioning node, e.g., Evolved Serving Mobile Location Center (E-SMLC), Minimization of Drive Tests (MDT), Multi-cell/multicast Coordination Entity (MCE), etc.

The communication network 100 covers a geographical area which may be divided into cell areas, wherein each cell area may be served by a base station, although, one base station may serve one or several cells. The communication network 100 comprises at least a cell. In the non-limiting example depicted in Figure 1, the base station 111 serves the cell, which is also referred to herein as a **serving cell 121.** The base station 111 may be of different classes, such as, e.g., macro eNodeB, home eNodeB or pico base station, based on transmission power and thereby also cell size. The base station 111 may support one or several communication technologies, and its name may depend on the technology and terminology used. In LTE, the base station 111, which may be referred to as an eNB, may be directly connected to one or more core networks, which are not depicted in Figure 1 to simplify the Figure. In some examples, the base station 111 may be a distributed node, such as a virtual node in the cloud, and it may perform its functions entirely on the cloud, or partially, in collaboration with a radio network node.

A plurality of user equipments are located in the wireless communication network 100, whereof a **User Equipment (UE) 130,** which may also be referred to as a device, is depicted in the non-limiting example of Figure 1. In some embodiments the non-limiting terms UE or a wireless device are used interchangeably. The non-limiting term user equipment (UE) is used and it refers to any type of wireless device communicating with a network node or base station, and/or with another UE in a cellular or mobile communication system, e.g., over radio signals. Examples of UE are radio communication device, target device, device to device (D2D) UE, proximity capable UE, a.k.a. Proximity-based Services (ProSe) UE, machine type UE or UE capable of machine to machine (M2M) communication, eMTC UE, PDA, Tablet, low-cost and/or low-complexity UE, a sensor equipped with UE, Tablet, mobile terminals, smart phone, Laptop Embedded Equipped (LEE), Laptop Mounted Equipment (LME), USB dongles Customer Premises Equipment (CPE) etc. MTC capable UE may also be defined in terms of certain UE category. Examples of such UE categories are UE category 0, UE category M1, UE category narrow band 1 (NB1) etc. The communication may be performed e.g., via a RAN, and possibly the one or more core networks, which may comprised within the communication network 100.

The base station 111 may be configured to communicate within the communication network 100 with the UE 130 over a **first link 141,** e.g., a radio link.

The UE 130 may be served by the serving cell 121 which may have already been identified by the UE 130. The UE 130 may further identify at least one another cell, which may be called a target cell or **neighbour cell 122.** In some embodiments, the serving cell 121 and neighbour cell 122 may be served or managed by the same network node e.g. the base station 111, as depicted in the example of Figure 1a.

In some embodiments, such as that depicted in Figure 1b, the serving cell 121 and neighbour cell 122 may be served or managed by the base station 111, e.g., a first network node or first node (Node1), and a second network node or **second node 112** (Node2) such as a second base station, respectively. The second node 112 may also be referred to herein as another network node, or neighbour node. The second node 112 may be configured to communicate within the communication network 100 with the UE 130 over a **second link 142,** e.g., a radio link.

The embodiments are applicable to single carrier as well as to multicarrier or carrier aggregation (CA) operation of the UE 130 in which the UE 130 may be able to receive and/or transmit data to more than one serving cells. The term carrier aggregation (CA) may be also called, e.g., interchangeably called, "multi-carrier system", "multi-cell operation", "multi-carrier operation", "multi-carrier" transmission and/or reception. In CA, one of the Component Carriers (CCs) is the Primary Component Carrier (PCC), or simply primary carrier, or even anchor carrier. The remaining ones may be called Secondary Component Carrier (SCC) or simply secondary carriers or even supplementary carriers. The serving cell 121 may be interchangeably called as primary cell (PCell) or primary serving cell (PSC). Similarly, the secondary serving cell, e.g., the neighbour cell 122, may be interchangeably called as Secondary Cell (SCell) or Secondary Serving Cell (SSC).

In some embodiments, the UE 130 may be configured with PCell and Primary SCell (PSCell) or with PCell, PSCell and one or more SCells such as in dual connectivity and/or carrier aggregation. The configured cells may be UE specific, a.k.a. serving cells of the UE 130.

The embodiments herein may be understood to apply for any RRC state, e.g., RRC_IDLE and RRC_CONNECTED. For example, the embodiments herein may be applicable for a UE, such as the UE 130 in a low or in high activity state. Examples of low activity state are RRC idle state, idle mode etc. Examples of low activity state are RRC CONNECTED state, active mode, active state etc. The UE 130 may be configured to operate in Discontinuous Reception (DRX) or in non-DRX. If configured to operate in DRX, it may still operate according to non-DRX as long as it may receive new transmissions from the base station 111.

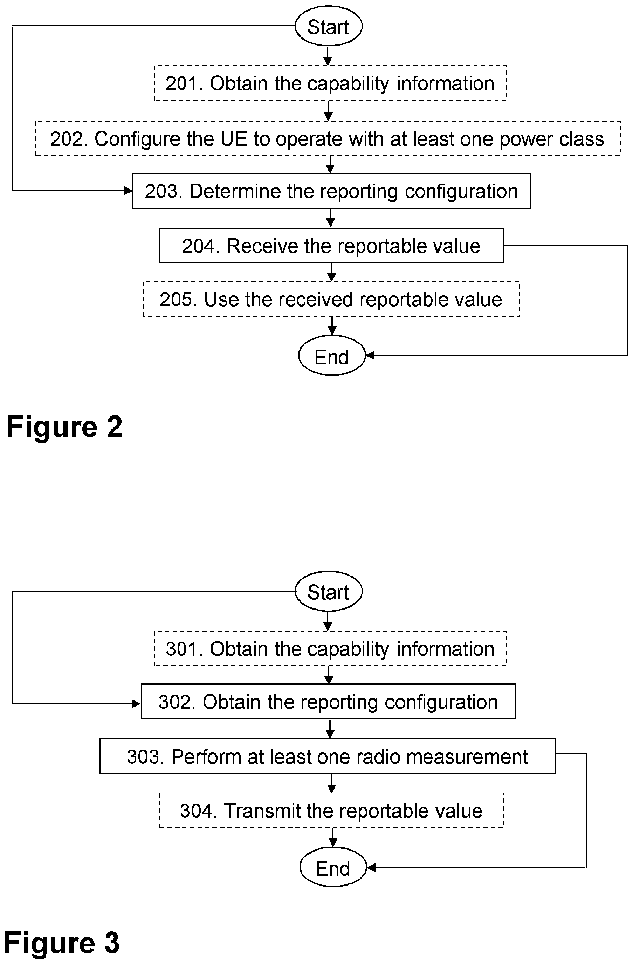

Embodiments of method performed by the base station 111, will now be described with reference to the flowchart depicted in **Figure 2.** The base station 111 may be understood to be operating in the communication network 100.

The method may comprise the actions described below. Several embodiments are comprised herein. In some embodiments, some of the actions may be performed. In some embodiments all the actions may be performed. One or more embodiments may be combined, where applicable. All possible combinations are not described to simplify the description. It should be noted that the examples herein are not mutually exclusive. Components from one example may be tacitly assumed to be present in another example and it will be obvious to a person skilled in the art how those components may be used in the other examples. In Figure 2, optional actions are indicated with dashed boxes.

**Action 201**

To ultimately enable to provide a reporting configuration adapted to a power class of the UE 130, in some embodiments, the base station 111 may first, in this Action 201, obtain a capability information of the UE 130. The capability information may indicate one of: a) that the UE 130 may be capable of supporting at least two UE power classes, and b) that the UE 130 may be capable of supporting power class of 14 dBm.

Capability information may be understood as information regarding one or more power classes supported by the UE 130.

Power class may be understood, as described earlier, as a maximum transmit power level that the UE 130 may use for transmitting uplink signals. For example the capability information may indicate that the UE 130 supports power class 1 (31 dBm) and power class 3 (23 dBm). In another example, the capability information may indicate that the UE 130 supports power class 5 (20 dBm), and power class 3 (23 dBm). In yet another example, the capability information may indicate that the UE 130 supports power class 5 (20 dBm), power class 3 (23 dBm) and a power class of 14 dBm, e.g., power class X. The capability information may further indicate the bands associated with different power classes supported by the UE 130. Typically, one power class is supported for one band. However, embodiments may be also applicable for the case where two or more different UE 130 power classes are supported for the same band.

An example of such mapping or association or relation between UE power classes and bands supported by the UE is shown in **Table 3**. Typically, for lower power classes, a UE may support lower bands, that is, bands with lower frequencies. This may enable better coverage of the UE in a cell.

**Table 3. Example of mapping between UE power classes and bands supported by the UE**

| Identifier | Power class | Supported bands |
|---|---|---|
| 0 | 3 (23 dBm) | Band 1 (2 GHz), Band 3 (1800 MHz) |
| 1 | 5 (20 dBm) | Band 8 (900 MHz), Band 5 (850 MHz) |
| 2 | X (14 dBm) | Band 13 (700 MHz), Band 28 (700 MHz), band 31 (450 MHz) |

With regards to Action 201, obtaining may also be understood as, e.g., determining or receiving, e.g., via the first link 141.

The obtained capability information about the UE power classes supported by the UE 130 may be based on one or more of the following means or options. In a first option, the capability information may be obtained by receiving the capability information from the UE 130, e.g., via RRC signalling, as part of the UE 130 radio access capability.

In another option, the capability information may be obtained by receiving the capability information from another node that contains or has, such information, e.g., from another UE, from a neighbouring network node such as the second node 112 e.g., via the second link 142, from core network node etc. In yet another option, the capability information may be obtained based on historical data or previously acquired capability information. In a further option, the capability information may be obtained based on pre-defined information, or a requirement, or a rule. For example, certain power classes may be linked to a certain radio capability of the UE 130. For example, a lower UE 130 power class, e.g. 14 dBm, may be supported only for a certain range of frequencies, e.g., for bands below 1 GHz. An intermediate UE 130 power class, e.g., 20 dBm, may be supported for a certain intermediate range of frequencies e.g., for bands between 1 and 2 GHz. A higher UE 130 power class, e.g. 23 dBm, may be supported only for certain higher range of frequencies e.g. for bands above 2 GHz.

In a particular example, the base station 111 may obtain the capability information of the UE 130, indicating that the UE 130 is capable of supporting at least two UE 130 power classes, e.g., power class 1 and power class 3, or power classes 1, 3 and 14 dBm.

**Action 202**

In some embodiments, wherein the capability information of the UE 130, e.g., as obtained in Action 201, may indicate that the UE 130 is capable of supporting at least two UE power classes, the base station 111 may, in this Action 202, configure the UE 130 to operate with at least one of the UE power classes supported by the UE 130. At least one of the UE 130 power classes supported by the UE 130 may have been determined in Action 201.

The base station 111 may configure the UE 130 with the power class explicitly or implicitly. In one example of explicit configuration, the base station 111 may directly configure the UE 130 to operate with certain power class, e.g., power class 3. In one example of implicit configuration, the base station 111 may configure the UE 130 to operate on a certain frequency band, e.g., band 8. Each band may be associated with a power class based on the UE 130 capability. Based on this association, the UE 130 may then be enabled to determine the power class with which it may need to operate on the configured band.

For configuring the UE 130 power class, the base station 111 may further take into account frequency bands supported by the base station 111. For example, the base station 111 may configure the UE 130 with a power class that may also be supported by the base station 111, that is, the corresponding band may be supported by both, the UE 130 and the base station 111.

The base station 111 may further configure the UE 130 to perform one or more radio measurements on signals transmitted by the base station 111 in a cell, such as the serving cell 121, and/or on signals transmitted by the UE 130 in the cell.

This Action 202 is optional.

**Action 203**

In this Action 203, the base station 111 determines a reporting configuration for the UE 130 to report power headroom to the base station 111. The determining in this Action 203 is based on a power class of the UE 130, that is, at least one of the power classes supported by the UE 130, in the event the UE 130 supports more than one power class. The reporting configuration comprises a plurality of reportable values, wherein each reportable value corresponds to a respective range of values of a power headroom. The respective range each reportable value corresponds to is a function of a power class of the UE 130.

The Power Headroom (PH) may be defined as the difference between the UE 130 nominal maximum output power or the UE 130 configured power and the estimated output power. It may typically be expressed in log scale. For example, the PH may be understood as a difference between a UE's configured maximum output power ($P_{CMAX}$) and the estimated power of one or more uplink signals expressed in log scale e.g., X dB. The PH may be performed on any one or combination of uplink signals transmitted by the UE 130 e.g., reference signals such as SRS, DMRS etc., on a physical channel such as PUCCH, PUSCH, Physical Random Access CHannel (PRACH), Narrowband PUSCH (NPUSCH), Narrowband PUCCH (NPUCCH), Narrowband Random Access CHannel (NRACH) etc.

Regarding the determining in this Action 203 being based on the power class of the UE 130, in some embodiments, the determining 203 the reporting configuration for the UE 130 to report power headroom to the base station 111, may further comprise determining the power class of the UE 130. And it may further comprise associating the determined power class with the reporting configuration for the UE 130 to report power headroom to the base station 111. In one example, the determination of the reporting configuration may be based on the UE 130 capability information received from the UE 130 in Action 201. In some examples, the base station 111 may determine at least one measurement reporting configuration out of at least two possible configurations for reporting measurement results to the base station 111, based on at least one of the determined power classes of the UE 130, as determined in Action 201.

In the embodiments wherein the UE 130 may be capable of supporting at least two UE 130 power classes, determining the power class of the UE 130 may be understood to comprise determining the power class the UE 130 is configured to operate with. The UE 130 may be configured by the base station 111 to operate with at least one of the power classes supported by the UE 130. Therefore, before determining the reporting configuration, the UE 130 may also determine if it is configured with a particular power class out of the power classes supported by the UE 130.

In some embodiments, the power class of the UE 130 may be 14 dBm. The power class may be the determined power class.

The term reporting configuration is also interchangeably called measurement reporting configuration, measurement report mapping, report mapping etc The reporting configuration herein may comprise the plurality of reportable values or reported values. A reportable value may be understood as the value that may be indicated to the base station 111. The reporting configuration may also comprise information on a minimum reportable value, and a maximum reportable value, and a resolution or granularity. Each reportable value, which may later become a reported value once reported by the UE 130, may correspond to the value of a measurement quantity or range of the measurement quantity. The measurements applicable are described in detail in the section General description of terms used herein. In some embodiments, the *reporting configuration* in the above may comprise a reporting of Radio Resource Management (RRM) measurements, such as RSRP, RSRQ, Narrowband RSRP (NRSRP), Narrowband RSRQ (NRSRQ), etc.. But it may also comprise reporting of power headroom information in the UE 130 to the base station 111. It may also comprise reporting of information about the transmit power of the UE 130 to the base station 111.

One type of reporting configuration that may be used by the UE 130 to report results of the measurement to the network node is the power headroom report mapping. Power headroom (PH) reporting may be used by the UE 130 to inform the serving network node, e.g., the base station 111, about the power usage, that is, the amount of transmission power available at the UE 130.

The reporting configuration, wherein each reportable value of the plurality of reportable values corresponds to the respective range of values of a power headroom may be for example, a table. Examples of such a table are provided below as Tables 4-9. In each of these tables, the plurality of reportable values is depicted in the left column, as 0, 1, 2, 3 and each respective range of values is depicted in each row, on the right column.

Each reportable value corresponds not to one single PH value, but to a respective range of values. That is, each reportable value corresponds to a different range of values.

The respective range of values of the power headroom indicated by the received reportable value may comprise a measured power headroom.

The PH may be also measured by the UE 130 and reported per component carrier in case the UE 130 is configured with multicarrier operation e.g. CA, Dual Connectivity (DC) etc. As an example, a NB-IoT UE 130 is one type of low cost and low complexity UE 130. For such UE 130, the power headroom may be defined as follows:

$$PH(i) = P_{CMAX,c}(i) - \{P_{O\_NPUSCH,c}(1) + \alpha_c(1) \cdot PL_c\}$$

The value of PH(i) may be either negative or positive. A negative value means that the serving network node, here, the base station 111, has scheduled this UE 130 with a data rate higher than what the UE 130 may be able to handle. That is, the UE 130 may be limited by $P_{CMAX,c}(i)$. A positive value on the other hand means that UE 130 has power left, that is, that the UE 130 is not using the maximum power and/or may handle a higher data rate that what is currently scheduled with.

That the respective range each reportable value corresponds to is a function of a power class of the UE 130 may be understood as that different power classes, may correspond to different series of respective ranges of values. For example, if the reporting configuration is a table, each power class may be understood to correspond to a different table, wherein at least of the respective ranges of values is different.

In some embodiments, the reporting configuration may comprise a reporting resolution. The reporting resolution may be understood as an accuracy with which the PH may be reported, as based on the respective range of values of the power headroom indicated by the reportable values.

The reporting resolution may be adapted as a function of the power class of the UE 130. That is, the respective ranges of values or reporting ranges may be adapted as a function of the power class of the UE 130. This may be understood to mean as that for different power classes, at least a minimum value of a maximum value in at least one of the respective ranges of values may be different. In one example, for a UE with power class of 14 dBm, the lowest possible reportable value will correspond to a lowest possible value of in the respective range of -14. Similarly, for UE with a power class of 16 dBm, the lowest possible reportable value will correspond to correspond to a lowest possible value of in the respective range of -16. Similarly, for UE with a power class of 18 dBm, the lowest possible reportable value will correspond to correspond to a lowest possible value of in the respective range of -18. An impact on the minimum reportable value will certainly have an impact on the other values such as the reporting resolution and the maximum possible reportable value, since the number of values that may be reported is fixed regardless of the power class, e.g., two bits may be available for reporting, which means 4 different values may be reported. This, that is, adapting the reporting resolution to the power class of the UE 130, may enable the UE 130 to report the power headroom more accurately, and this may in turn result in that more suitable scheduling resources that match the UE 130's capability in terms of maximum usable power may be selected in the base station 111. This is exemplified in the reporting configurations of **Table 4, Table 5,** and **Table 6.**

These tables also exemplify that, in some embodiments, the reporting configuration may be further based on a coverage level the UE 130 is in, which will be described in detail later.

**Table 4: Example 1, power headroom report mapping for low power class UEs, e.g., 14 dBm**

| Reported value | Measured quantity value (dB) |
|---|---|
| POWER_HEADROOM_0 | $-14 \leq PH < -9$ |
| POWER_HEADROOM_1 | $-9 \leq PH < 0$ |
| POWER_HEADROOM_2 | $0 \leq PH < 8$ |
| POWER_HEADROOM_3 | $PH \geq 8$ |

**Table 5: Example 2, power headroom report mapping for low power class UEs in normal coverage, e.g., 14 dBm**

| Reported value | Measured quantity value (dB) |
|---|---|
| POWER_HEADROOM_0 | $-14 \leq PH < 5$ |
| POWER_HEADROOM_1 | $5 \leq PH < 8$ |
| POWER_HEADROOM_2 | $8 \leq PH < 11$ |
| POWER_HEADROOM_3 | $PH \geq 11$ |

**Table 6: Example 2, power headroom report mapping for low power class UEs in enhanced coverage, e.g., 14 dBm**

| Reported value | Measured quantity value (dB) |
|---|---|
| POWER_HEADROOM_0 | $-14 \leq PH < -10$ |
| POWER_HEADROOM_1 | $-10 \leq PH < -2$ |
| POWER_HEADROOM_2 | $-2 \leq PH < 6$ |
| POWER_HEADROOM_3 | $PH \geq 6$ |

In one example, there may be at least two reporting configurations that may correspond to two different power classes of the UE 130, but with the same coverage area, e.g. normal coverage or enhanced coverage.

Furthermore, it may be expected that the target Maximum Configuration Loss (MCL) for the low power class UE 130 may be lower than that of an enhanced coverage mode UE 130, which may be e.g., -164 dB. MCL may be understood as an enhanced coverage level. This means that the resolution may be different, since the number of reportable values is still limited to 4. It may serve as another rationale for defining a new separate power headroom reporting table, specific for low power class UE 130, e.g., which specific for UE power class of 14 dBm.

An example of a power headroom reporting table that may be used for a low power class of 14 dBm is given in Table 4 above. In this example, it is assumed that the UE 130 may report two values in the negative ranges and two values in the positive ranges.

In yet another example, of power headroom reporting table, there may still be two reporting tables, that is, one for each coverage mode. But the reporting resolution may be different as that shown in Table 5 and Table 6. The advantage of this is that UE 130 may report more values in the positive ranges when operating in normal coverage, and more values in the negative ranges when operating in enhanced coverage because in that case, UE 130 is expected to be power-limited.

There is a clear advantage in having the reporting configuration of the measurement results that depends on the power class of the UE 130 instead of having a fixed reporting configuration that is used regardless of the power class. This will provide the serving network node, in this case, the base station 111, with more accurate information on the actual power usage in the UE 130, and the base station 111 may then adapt its scheduling resources accordingly, as described in Action 205.

The reporting configurations in Tables 4-6 are exemplified for power headroom reporting. However, the same principle of adapting the reporting ranges and the reporting resolution as function the power class of the UE 130, that is, the maximum power that the UE 130 may use for transmitting the uplink signals, may apply to all type of reporting. Examples of other type of reporting may be RRM measurement reporting, signal quality reporting, signal strength reporting, positioning measurement reporting, timing information reporting, etc.

Different algorithms may be used to determine the exact reporting configuration. For example, when the UE 130 is determined to be a normal power class UE, e.g., 23 dBm, a simple algorithm may be used, e.g., multiplication by 1, resulting in the same resolution over entire reporting range. On other hand, when the UE 130 is determined to be a low power class UE 130, a similar algorithm may be used, e.g., multiplication by 2, which will decrease the resolution. Examples of other algorithms may be subtraction, addition, division by different factors depending on the actual power class. In some cases, a combination of these algorithms may be used, e.g. multiplication by factor 1 in lower ranges, and multiplication by factor 4 in higher ranges. In another example, multiplication may be used in lower ranges while addition may be used in higher ranges, etc.

Another example of power headroom report mapping adapted for lower power class, e.g., 14 dBm, is shown in **Table 7.** In this example, Example 3, the same report mapping is used regardless of the UE 130 coverage with regard to its serving cell 121. Compared to Example 1 in Table 4, in Example 3 in Table 7, the smallest resolution or granularity of the measured quantity is much shorter, that is, 4 dB in Table 7 instead of 8 dB in Table 4.

**Table 7: Example 3, power headroom report mapping for low power class UEs, e.g., 14 dBm**

| Reported value | Measured quantity value (dB) |
|---|---|
| P0WER_HEADROOM_0 | $-14 \leq PH < 0$ |
| POWER_HEADROOM_1 | $0 \leq PH < 4$ |
| POWER_HEADROOM_2 | $4 \leq PH < 8$ |
| POWER_HEADROOM_3 | $PH \geq 8$ |

Another set of examples of power headroom report mapping adapted for lower power class, e.g., 14 dBm, is shown in **Table 8** and **Table 9** for normal and enhanced coverage, respectively. In these examples as well, smaller resolution of the measurement quantities is used. For example, under normal coverage and enhanced coverage the smallest resolution is 3 dB and 4 dB respectively.

**Table 8: Example 4, power headroom report mapping for low power class UEs in normal coverage, e.g. 14 dBm**

| Reported value | Measured quantity value (dB) |
|---|---|
| P0WER_HEADROOM_0 | $-14 \leq PH < 7$ |
| POWER_HEADROOM_1 | $7 \leq PH < 9$ |
| POWER_HEADROOM_2 | $9 \leq PH < 11$ |

(continued)

| Reported value | Measured quantity value (dB) |
|---|---|
| POWER_HEADROOM_3 | PH $\geq$ 11 |

**Table 9: Example 4, power headroom report mapping for low power class UEs in enhanced coverage, e.g. 14 dBm**

| Reported value | Measured quantity value (dB) |
|---|---|
| POWER_HEADROOM_0 | -14 $\leq$ PH < -6 |
| POWER_HEADROOM_1 | -6 $\leq$ PH < -2 |
| POWER_HEADROOM_2 | -2 $\leq$ PH < 2 |
| POWER_HEADROOM_3 | PH $\geq$ 2 |

The actions of determining the reporting configuration to be used by the UE 130 for reporting the measurement results to the base station 111 may comprise, e.g. one or more of the following.

In some examples, determining the reporting configuration may comprise determining based on a pre-defined rule. For example, assuming at least two possible power classes and two different measurement reporting configurations, the base station 111 may determine to use a first reporting configuration if it is determined that the UE 130 power class is X dBm and a second reporting configuration if the UE 130 power class is Y dBm. As an example, X and Y may be 14 dBm and 23 dBm, e.g., power class 3.

In other examples, determining the reporting configuration may comprise selecting based on the allocated resources. For example, the base station 111 may allocate resources for enabling the UE 130 to report the results using the reporting configuration. The base station 111 may allocate resources to the UE 130 proactively or based on a request received from the UE 130, e.g., when the UE 130 may have to send the results to the base station 111.

In yet other examples, determining the reporting configuration may comprise selecting based on the pre-defined requirements, e.g., in the specification. For example, UEs with limited transmit power, a.k.a. low-power class UEs, may have different requirements than legacy UEs with higher transmit power.

In other examples, determining the reporting configuration may comprise a message or indicator received from another node, e.g., a network node.

In yet other examples, determining the reporting configuration may comprise determining based on a value or using a value received from another node, e.g., a network node.

In further examples, determining the reporting configuration may comprise determining based on history or stored information.

The base station may select one of the two reporting configurations based on the determined power class of the UE 130 to do power headroom reporting. This may be understood to mean that at least two different reporting configurations may have been defined, e.g., for each coverage mode.

In summary, in a first example of adaptation of the measurement reporting configuration:

-   If the UE 130 is configured with UE power class 3 or UE power class 5, then the base station 111 may determine the reporting configuration for the UE 130 to be Table 1 and Table 2 in normal coverage and enhanced coverage, respectively, for reporting PH to the base station 111.
-   But if the UE 130 is configured with lower UE power class, e.g., 14 dBm, then base station 111 may determine the reporting configuration for the UE 130 to be Table 4 regardless of the UE 130 coverage for reporting PH to the base station 111.

In summary, in a second example of adaptation of the measurement reporting configuration:

-   If the UE 130 is configured with UE power class 3 or UE power class 5, then the base station 111 may determine the reporting configuration for the UE 130 to be Table 1 and Table 2 in normal coverage and enhanced coverage, respectively for reporting PH to the base station 111.
-   But if the UE 130 is configured with lower UE 130 power class, e.g., 14 dBm, then the base station 111 may determine the reporting configuration for the UE 130 to be Table 5 and Table 6 in normal coverage and enhanced coverage respectively for reporting PH to the network node.

In summary in a third example of adaptation of the measurement reporting configuration:

- If the UE 130 is configured with UE 130 power class 3 or UE 130 power class 5, then the base station 111 may determine the reporting configuration for the UE 130 to be Table 1 and Table 2 in normal coverage and enhanced coverage, respectively, for reporting PH to the base station 111.
- But if the UE 130 is configured with lower UE 130 power class, e.g., 14 dBm, then the base station 111 may determine the reporting configuration for the UE 130 to be Table 8 and Table 9 in normal coverage and enhanced coverage, respectively, for reporting PH to the base station 111.

**Action 204**

In this Action 204, the base station 111 receives, from the UE 130, a reportable value from the plurality of reportable values. The respective range of values of the power headroom indicated by the received reportable value is based on the determined reporting configuration. For example, the base station 111 may receive from the UE 130 the results of the performed radio measurements based on at least one of the determined
measurement reporting configurations in Action 203. These results may be understood to be indicated by the reportable value, e.g., a value of 0, 1, 2, or 3, that is, for example, one of the values on the left column of any of Tables 4-9. That the respective range of values of the power headroom indicated by the received reportable value is based on the determined reporting configuration may be understood to mean that the respective range indicated by the reportable value may be different depending on the determined reporting configuration, e.g., depending on the table the base station 111 may have determined the UE 130 may have used for the reporting.
In some embodiments, the reportable values, such as the received reportable value, may be comprised in two bits. As an example, the UE 130, which may be a NB-IoT UE, may report the power headroom information, as the reportable value, using the message 3 (Msg3) in random access procedure using 2 bits for the lowest configured NB-PRACH repetition level. This means that 4 different values may be reported.
The receiving may be performed, e.g., via the first link 141.
Further details of the methods of receiving the results of the performed radio measurements from the UE 130 may be similar to those described for the UE 130 in Action 304 below.

**Action 205**

After receiving the reportable value from the UE 130 in Action 204, the base station 111 may, in this Action 205, use, based on the determined reporting configuration, the received reportable value for performing one or more operational tasks.
In this Action, the base station 111 may use the received reporting information, that is, the reportable value, from the UE 130 indicating the results of the measurements that may have been performed using the determined reporting configuration, for performing one or more operational tasks.
As stated earlier the PH reporting may be used by the UE 130 to inform the base station 111, about the power usage, that is, the amount of transmission power available at the UE 130. This information may be later used by the uplink scheduler in the base station 111 to adapt the transmission parameters, e.g., modulation scheme, coding rate, and resources assigned to the UE 130 for uplink transmission. The PH may also be used by the base station 111 for other tasks or procedures e.g., uplink power control, link adaption, mobility, positioning, determination of UE 130 coverage with regard to the serving cell 121 etc.
Hence, examples of operational tasks may be scheduling, mobility, positioning, power control, forwarded or transmitting the results to another node etc. These tasks are further elaborated below.
For example, if the received power headroom information, that is, the reportable value, indicates that there is power left after transmission using the granted resources, then the base station 111 may choose an even higher-order modulation scheme compared to what was previously used. This way, the transmission resources may be adapted according to actual power usage in the UE 130, which may result in efficient usage of the resources, and hence, also faster transmission.
In a second example, the received reporting information may better reflect the actual channel measurement result than existing methods, since the used reporting configuration may be based on actual power class of the UE 130. This may in turn improve all other operational procedures that may use this measurement, e.g. handover, mobility, cell change, the neighbour cell 122 measurements etc.
In a third example, the base station 111 may use the received reportable value for transmitting or signalling information related to the determined reporting configuration to other network nodes. Examples of other nodes which receive the information may be neighbour network nodes such as the second node 112, core network nodes, a positioning node, any type of relay node, UE, D2D UE, MTC UE, or any other node used for dedicated services such as a self-organizing network (SON) node.

The information on reporting configuration may be signalled by the base station 111 to other UEs of same or similar power classes, or nodes that may be serving or managing UEs with same or similar power classes.

There are significant benefits in sharing the determined information with other nodes. One benefit is that this information may be applicable to UEs in its neighbour network nodes, that is, served by its neighbour network nodes, and in that case, it may be reused directly by signalling them to their own users. This way, the reporting may be improved in large scale. A second benefit is that the determination of reporting configurations which may be quite complex sometimes, may be done in one place and only once, and then signalled to other nodes in the communication network 100. This way, processing in the base station 111, or in another network node may be reduced.

The signalling of information related to reporting configuration may be done in a periodic, event-triggered or event-triggered periodic basis; event-triggered means that it is signalled whenever the reporting is performed.

This Action 205 is optional.

Embodiments of a method performed by the UE 130, will now be described with reference to the flowchart depicted in **Figure 3.** The UE 130 may be understood to be operating in the communication network 100.

The method may comprise one or more of the following actions. Several embodiments are comprised herein. In some embodiments all the actions may be performed. One or more embodiments may be combined, where applicable. All possible combinations are not described to simplify the description. It should be noted that the examples herein are not mutually exclusive. Components from one example may be tacitly assumed to be present in another example and it will be obvious to a person skilled in the art how those components may be used in the other examples. In Figure 3, optional actions are indicated with dashed boxes.

The detailed description of some of the following corresponds to the same references provided above, in relation to the actions described for the base station 111, and will thus not be repeated here to simplify the description. For example, the reportable values may be comprised in two bits.

**Action 301**

In some embodiments, the UE 130 may in this Action 301, obtain the capability information of the UE 130 indicating one of: a) that the UE 130 is capable of supporting at least two UE power classes, b) that the UE 130 is capable of supporting power class of 14 dBm, and c) the configuration from the base station 111 to operate with one of the at least two UE power classes supported by the UE 130.

In some examples, the UE 130 may obtain information that it supports at least two different UE 130 power classes, that is, at least two different maximum transmit power levels that it may use for transmitting uplink signals.

This capability information, that is, the power classes supported by the UE 130 and associated bands, may be obtained based on one or more of the following: a) UE capability to support a certain maximum transmit power for transmitting the uplink signals; This information may be retrieved from the UE 130 memory; b) assistance from a network node, such as base station 111, related to the power class of the UE 130, e.g., information derived at the network node from the RACH procedure, or based on the uplink measurements performed in the network node; c) history or past statistics, e.g., the UE 130 may assume a certain maximum transmit power, provided that that transmit power has been used by the UE 130 at least L% of the time; d) stored information in the UE 130; e) stored in the Subscriber Identity Module (SIM) or indication obtained from an operator, e.g., via an application program; f) information derived based on the uplink repetitions (R) that may be used for transmitting the uplink signals, e.g., higher number of uplink repetitions may be necessary when the transmit power is limited, compared to when it is not limited to reach a certain coverage level. This information may be used indirectly to determine its maximum transmit power, that is, the power class, or classes, or the UE 130.

**Action 302**

In this Action 302, the UE 130 obtains the reporting configuration to report power headroom to the base station 111. The reporting configuration comprises the plurality of reportable values, wherein each reportable value corresponds to the respective range of values of the power headroom. The respective range of values of the power headroom each reportable value corresponds to is a function of the power class of the UE 130.

Obtaining may be understood as, e.g., determining. The determining in this Action may be performed similarly in described for the base station 111 in Action 203, and most details will not be repeated here.

In some embodiments, the obtaining 302 the reporting configuration to report power headroom may further comprise determining the power class of the UE 130. And it may further comprise associating the determined power class of the UE 130 with the reporting configuration to report power headroom.

In some embodiments, the power class of the UE 130 may be 14 dBm. The power class may be the determined power class.

In some examples, the UE 130 may determine at least one measurement reporting configurations out of at least two possible configurations for reporting measurement results to the base station 111 based on at least one of the determined power classes of the UE 130 in Action 301.

The UE 130 may be configured by the base station 111 to operate with at least one of the power classes supported by the UE 130. Therefore, before determining the reporting configuration, the UE 130 may also determine if it is configured with a particular power class out of the power classes supported by the UE 130.

The UE 130 may be configured by the base station 111 explicitly or implicitly with at least one of the power classes for operations. In one example of explicit configuration, the UE 130 may be directly configured to operate with certain power class, e.g., power class 3. In this case, the UE 130, when operating on a certain band linked to this power class, may use this power class for transmitting uplink signals. In one example of implicit configuration, the UE 130 may be configured to operate on a certain frequency band, e.g., band 8. Each band may be associated with a power class based on the UE 130 capability. Based on this association, the UE 130 may determine the power class with which it may need to operate on the configured band. In this case, the UE 130, when operating on the configured band, may use the determined power class for transmitting uplink signals.

The actions of determining the measurement reporting configuration to be used by the UE 130 for reporting the measurement results to the base station 111 may comprise, e.g. one or more of the following.

In some examples, determining the reporting configuration to be used by the UE 130 for reporting the measurement results to the base station 111 may comprise determining based on a pre-defined rule. For example, assuming at least two possible power classes and two different measurement reporting configurations, the UE 130 may determine to use a first reporting configuration if it is determined that the UE 130 power class is X dBm and a second reporting configuration if the UE 130 power class is Y dBm. As an example, X and Y may be 14 dBm and 23 dBm, e.g., power class 3.

In other examples, determining the reporting configuration to be used by the UE 130 for reporting the measurement results to the base station 111 may comprise selecting based on the allocated resources. For example, the UE 130 may relate the recommended MCS and coding rate to the channel quality, if the channel is good and the signal strength/quality are good, but the base station 111 still schedules the UE 130s using higher MCS and coding rate than what it usually does.

In yet other examples, determining the reporting configuration to be used by the UE 130 for reporting the measurement results to the base station 111 may comprise selecting based on the pre-defined requirements, e.g., in the specification. For example, UEs with limited transmit power, a.k.a. low-power class UEs, may have different requirements than legacy UEs with higher transmit power.

In other examples, determining the reporting configuration to be used by the UE 130 for reporting the measurement results to the base station 111 may comprise a message or indicator received from another node, e.g., a network node. For example the UE 130 may be configured by the network node, e.g. a serving base station such as the base station 111, to use a particular measurement reporting configuration for reporting results when configured with certain power class.

In yet other examples, determining the reporting configuration to be used by the UE 130 for reporting the measurement results to the base station 111 may comprise determining based on a value or using a value received from another node, e.g., a network node.

In further examples, determining the reporting configuration to be used by the UE 130 for reporting the measurement results to the base station 111 may comprise determining based on history or stored information.

In some embodiments, the reporting configuration may comprise the reporting resolution. The reporting resolution may be adapted as a function of the power class of the UE 130.

In some embodiments, the reporting configuration may be further based on the coverage level the UE 130 is in. The coverage level may be as discussed earlier, e.g., enhanced or normal.

The UE 130 may select one of the two reporting configurations based on its determined power class to do power headroom reporting. This may be understood to mean that at least two different reporting configurations may have been defined, e.g., for each coverage mode.

As described earlier, in summary, in a first example of adaptation of the measurement reporting configuration:

- If the UE 130 is configured with UE power class 3 or UE power class 5, then the UE 130 may use Table 1 and Table 2 in normal coverage and enhanced coverage, respectively, for reporting PH to the base station 111.
- But if the UE 130 is configured with lower UE power class, e.g., 14 dBm, then the UE 130 may use Table 4 regardless of the UE 130 coverage for reporting PH to the base station 111.

In summary, in a second example of adaptation of the measurement reporting configuration:

- If the UE 130 is configured with UE power class 3 or UE power class 5, then the UE 130 may use Table 1 and Table 2 in normal coverage and enhanced coverage, respectively for reporting PH to the base station 111.

- But if the UE 130 is configured with lower UE 130 power class, e.g., 14 dBm, then the UE 130 may use Table 5 and Table 6 in normal coverage and enhanced coverage respectively for reporting PH to the network node.

In summary in a third example of adaptation of the measurement reporting configuration:

- If the UE 130 is configured with UE 130 power class 3 or UE 130 power class 5, then the UE 130 may use Table 1 and Table 2 in normal coverage and enhanced coverage, respectively, for reporting PH to the base station 111.
- But if the UE 130 is configured with lower UE 130 power class, e.g., 14 dBm, then the UE 130 may use Table 8 and Table 9 in normal coverage and enhanced coverage, respectively, for reporting PH to the base station 111.

## Action 303

In this Action 303, the UE 130 performs, based on the determined reporting configuration, at least one radio measurement on signals received from and/or transmitted to a node. The term node herein may be understood as a network node or another UE.

In this Action, the UE 130 may perform at least one measurement on UL signals transmitted by the UE 130 to a first cell, also referred to herein as cell 1, and/or on DL signals received at the UE 130 from cell 1. The UE 130 may perform the measurement based on a measurement configuration received from a node e.g. from a network node such as the base station 111, or another UE. Cell 1 herein may be the serving cell 121 or the neighbour cell 122. The UE 130 may also perform measurements on a plurality of cells. In another exemplary implementation, the UE 130 may also perform the measurements on signals transmitted by the UE 130 to another UE, e.g. a UE 2, and/or on signals received at the UE 130 from another UE, e.g., UE 2.

In one example, the first node, the base station 111 and the second node 112 may be different e.g., the UE 130 perform measurements on the neighbour cell 122 and report results to the serving cell 121. In another example, the first node, e.g. the base station 111, and the second node 112 may be the same e.g., the UE 130 may perform measurements on the serving cell 121 and report results to the same serving cell 121.

## Action 304

In this Action 304, the UE 130 transmits, to the base station 111, the reportable value from the plurality of reportable values. For example, the UE 130 may transmit e.g., the value of 0, 1, 2, 4, as discussed earlier. The transmitted reportable value may be understood to be based on a result of the at least one radio measurement performed in Action 303.

According to this Action, the UE 130 may report the results of the measurement performed on cell 1 to a node, e.g., network node or another UE capable of D2D operation, using the determined or selected measurement reporting configuration e.g., the determined measurement report mapping in Action 302. Examples of network node may be the serving network node, that is, the base station 111, core network node, positioning node etc. Examples of another UE may be UE capable of direct D2D operation, direct Vehicle-to-Vehicle (V2V) operation etc.

In another exemplary implementation, the UE 130 may report the results of the measurement performed on UE 2 to a node, e.g., network node or another UE, using the determined or selected reporting configuration e.g., the determined measurement report mapping.

Examples of measurement results may be value of the performed measurement, identifier of a predefined value of the measurement result, absolute value of the results etc.

Examples of reporting configuration for reporting measurement results may be power headroom reporting, RRM measurement, e.g., Reference Signal- Signal-to-Interference and Noise Ratio (RS-SINR), RSRP, RSRQ, NRSRP, NRSRQ, etc. reporting, signal strength, signal quality reporting, load balancing information reporting, positioning measurements, e.g., UE 130 Rx-Tx time difference, RSTD, among others, etc.

The performing a measurement reporting to another node may further comprise any one or more of the following procedures or operational tasks: reporting RRM measurement results of the measurement performed on the serving cell 121, reporting RRM measurement results of the measurement performed on one or more neighbouring cells, reporting results of synchronization performed on one or more cells, reporting system information results of SI acquired for one or more neighbouring cells, e.g., reading MIB and/or one or more System Information Blocks (SIBs).

The respective range of values of the power headroom indicated by the transmitted reportable value may comprise a measured power headroom.

The plurality of reportable values, wherein each reportable value corresponds to the respective range of values of a power headroom may be, as discussed earlier, a table.

All type of reporting may be expected to take place in a higher activity state of the UE 130 e.g. in RRC_CONNECTED state. The embodiments may be also applicable for the reporting of measurement in a lower activity state of the UE 130 e.g. in RRC IDLE state.

According to the foregoing, particular embodiments herein may relate to methods in the UE 130, which may be capable of different power classes, for adaptively selecting a reporting configuration based on the actual power class of the UE 130. Other particular embodiments herein may relate to methods in a network node, such as the base station 111, serving the UE 130, which may be capable of different power classes, for adaptively determining a reporting configuration based on the power class of the UE 130, and adapting its activity.

*General description of terms used herein*

*Measurements*

The embodiments herein may be applicable: for any type of one or more measurements, a.k.a. radio measurements, performed by the UE 130 on any one or combination of radio signals transmitted in a cell in uplink and/or downlink and for reporting the results of the measurements to a network node, such as the base station 111. The results may be reported by a reporting configuration. An example of reporting configuration may be a measurement report mapping. The measurement report mapping may also be interchangeably called simply as report mapping, measurement reporting range, reportable measurement values, measurement signalling range, measurement signalling mapping etc. It is assumed that at least two different measurement report mappings are available, e.g., pre-defined, configured by another node etc. for the same type of measurement for enabling the UE 130 to signal the measurement results to a network node or to another UE. The report mapping may comprise at least three parameters: a minimum reportable measurement value, a maximum reportable measurement value, and at least one resolution or granularity between success reportable values. A report mapping may comprise of two or more report resolutions.

The measurement may be performed by the UE 130 on one or more serving cells and/or on one or more neighbour cells. Radio signals may be one or more physical signals, such as reference signals or signals which may carry a physical channel, e.g., PDSCH, PDCCH, Enhanced PDCCH (E-PDCCH), Physical Uplink Shared Channel (PUSCH), Physical Uplink Control Channel (PUCCH) etc. A physical channel may carry higher layer information. Examples of DL reference signals are PSS, SSS, NPSS, NSSS, CRS, CSI-RS, NRS, PRS, Multimedia Broadcast Single Frequency Network Reference Signals (MBSFN RS), DMRS etc. Examples of UL reference signals may be Sounding Reference Signals (SRS), DMRS etc. Reference signals may also be interchangeably called discovery signals.

Examples of measurements which may be performed by the UE 130 on DL and/or Uplink (UL) signals are cell search aka cell identification, Power Headroom (PH), UE transmit power, RSRP, RSRQ, NRSRP, NRSRQ, Reference Signal (RS)-Signal to Interference and Noise Ratio (SINR), CRS-SINR, CSI-RSRP, CSI-RSRQ, sidelink RSRP (S-RSRP), CQI, CSI, UE 130 Rx-Tx time difference, SINR, Demodulation Reference Signals (DRS)-SINR, Narrowband Reference Signal-SINR (NRS-SINR), Observed Time Difference Of Arrival (OTDOA) Reference Signal Time Difference (RSTD), Round-Trip Time (RTT), Time of Arrival (TOA), Time Difference Of Arrival (TDOA), Angle-of-Arrival (AOA), CSI measurements, UE configured maximum output power ($P_{CMAX}$), UE transmit power, a.k.a. UE estimated or measured transmit power, Radio Link Monitoring (RLM), which may consist of Out of Synchronization (Out of Sync) detection and In Synchronization (In-Sync) detection etc. CSI measurements performed by the UE 130 may be used for scheduling, link adaptation etc. by the network, e.g., by the base station 111. Examples of CSI measurements or CSI reports may be CQI, PMI, RI etc. They may be performed on reference signals like CRS, CSI-RS or DMRS.

*Coverage level*

The UE 130 may operate under either normal coverage or enhanced coverage with respect to its serving cell 121. The enhanced coverage may also be interchangeably called extended coverage. The UE 130 may also operate in a plurality of Coverage levels (CE) e.g., normal coverage, a.k.a. CE level 0, enhanced coverage level 1, a.k.a. CE1, enhanced coverage level 2, a.k.a. CE2, enhanced coverage level 3, a.k.a. CE3, and so on. The UE 130, supporting the operation under at least two coverage levels, may e.g., operate at a time under either normal coverage or enhanced coverage with respect to the cell e.g., the serving cell 121.

The normal and extended coverage operations may typically take place on narrower UE 130 Radio Frequency (RF) bandwidth compared with the system bandwidth a.k.a. cell BW, cell transmission BW, DL system BWetc. In some embodiments, the UE 130 RF BW may be the same as of the system bandwidth. Examples of narrow RF BWs are 200 KHz, 1.4 MHz etc. Examples of system BW are 200 KHz, 1.4 MHz, 3 MHz, 5 MHz, 10, MHz, 15 MHz, 20 MHz etc. In case of extended/enhanced coverage, the UE 130 may be capable of operating under lower signal quality level, e.g., SNR, SINR, ratio of average received signal energy per subcarrier to total received power per subcarrier (Ês/Iot), RSRQ etc. compared to its capabilities when operating in legacy systems. The coverage level enhancement may vary with the operational scenario and may also depend on the UE type. For example, if the UE 130 is located in a basement with bad coverage may need larger level of coverage enhancement, e.g., 20 dB, compared to a UE which is at a cell border, e.g., -3 dB.

The coverage level of the UE 130 may be defined with respect to any cell e.g., the serving cell 121, a non-serving cell, a neighbour cell 122etc. The coverage level may also interchangeably be called the coverage enhancement (CE) level. For example, the CE level with regard to a cell may be expressed in terms of signal level received at the UE 130 from that cell. Alternatively, the CE level of the UE 130 with regard to a cell may be expressed in terms of signal level received at the cell from the UE 130. As an example, the received signal level may be expressed in terms of received signal quality and/or received signal strength at the UE 130 with regard to the cell. More specifically the coverage level may be expressed in terms of: a) received signal quality and/or received signal strength at the UE 130 with regard to a cell, and/or, b) received signal quality and/or received signal strength at the cell with regard to the UE 130.

Examples of signal quality may be SNR, SINR, CQI, RSRQ, NRSRQ, CRS Ês/Iot, Synchronization CHannel (SCH) Ês/Iot etc. Examples of signal strength may be path loss, path gain, RSRP, NRSRP, Synchronization CHannel Received Power (SCH_RP) etc. The notation Ês/Iot may be defined as a ratio of:

- Ês, which may be understood as the received energy per Resource Element (RE), that is, a power normalized to the subcarrier spacing, during the useful part of the symbol, i.e., excluding the cyclic prefix, at the UE 130 antenna connector, to
- Iot, which is the received power spectral density of the total noise and interference for a certain RE, that is, a power integrated over the RE and normalized to the subcarrier spacing, as measured at the UE 130 antenna connector.

The CE level may be also expressed in terms of two or more discrete levels or values e.g., CE level 1, CE level 2, CE level 3 etc... An example may be considered, wherein 2 coverage levels may be defined with regard to signal quality, e.g., SNR, at the UE 130 comprising:

- Coverage enhancement level 1 (CE1) comprising SNR $\geq$ -6 dB at UE 130 with regard to a cell, e.g., the serving cell 121; and
- Coverage enhancement level 2 (CE2) comprising of -15 dB $\leq$ SNR < -6 dB at UE 130 with regard to a cell, e.g., the serving cell 121.

In the above example, the CE1 may also be interchangeably called normal coverage level, baseline coverage level, reference coverage level, legacy coverage level etc. On the other hand, CE2 may be termed as enhanced coverage or extended coverage level.

In another example, two different coverage levels, e.g., normal coverage and enhanced coverage, may be defined in terms of signal quality levels as follows:

- The requirements for normal coverage may be applicable for the UE category NB1 with regard to a cell, provided that radio conditions of the UE 130 with respect to that cell are defined as follows: Synchronization CHannel (SCH) Ês/Iot $\geq$ -6 dB and CRS Ês/Iot $\geq$ -6.

- The requirements for enhanced coverage may be applicable for the UE category NB1 with regard to a cell, provided that radio conditions of the UE 130 with respect to that cell are defined as follows SCH Ês/Iot $\geq$ -15 dB and CRS Ês/Iot $\geq$ -15.

A parameter defining coverage level of the UE 130 with respect to a cell may also be signalled to the UE 130 by the base station 111. Examples of such parameters are CEModeA and CEModeB signalled to UE 130 category M1. For example:

- The requirements for CEMode A may apply, provided the UE category M1 is configured with CEMode A, SCH Ês/Iot $\geq$ -6 dB and CRS Ês/Iot $\geq$ -6 dB.
- The requirements for CEMode B may apply, provided the UE 130 category M1 is configured with CEMode B, SCH Ês/Iot $\geq$ -15 dB and CRS Ês/Iot $\geq$ -15 dB.

In the above examples Ês/Iot may be understood as the ratio of received power per subcarrier to the total interference including noise per subcarrier.

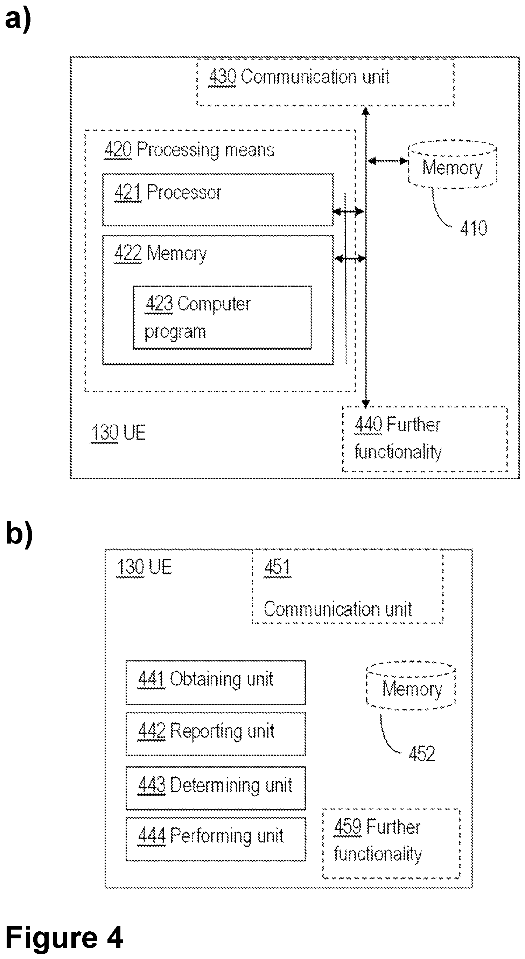

Embodiments herein also relate to the UE 130, configured for performing the method described above. Embodiments of the UE 130 will now be described with reference to **Figures 4a** and **4b.** The node has the same technical features, objects and advantages as the method performed by the UE 130 described above. The UE 130 will therefore be described only in brief in order to avoid unnecessary repetition.

Figures 4a and 4b illustrate the UE 130 being configured for performing the different embodiments of the method as described above.

The UE 130 may be realised or implemented in different ways. One exemplifying implementation, or realisation, is illustrated in Figure 4a. Figure 4a illustrates the UE 130 comprising a processor 421 and memory 422, the memory comprising instructions, e.g. by means of a computer program 423, which when executed by the processor 421 causes the UE 130 to perform the actions or steps of the method as described above.

Figure 4a also illustrates the UE 130 comprising a memory 410. It shall be pointed out that Figure 4a is merely an exemplifying illustration and memory 410 may optionally, be a part of the memory 422 or be a further memory of the UE 130. The memory may for example comprise information relating to the UE 130, to statistics of operation of the UE 130, just to give a couple of illustrating examples. Figure 4a further illustrates the UE 130 comprising processing means 420, which comprises the memory 422 and the processor 421. Still further, Figure 4a illustrates the UE 130 comprising a communication unit 430. The communication unit 430 may comprise an interface through which the UE 130 communicates with other nodes, servers, wireless devices or entities of the communication network. Figure 4a also illustrates the UE 130 comprising further functionality 440. The further functionality 440 may comprise hardware of software necessary for the UE 130 to perform different tasks that are not disclosed herein.

Another exemplifying implementation, or realisation, is illustrated in **Figure 4b.** Figure 4b illustrates the UE 130 comprising an obtaining unit 441, a reporting unit 442, a determining unit 443, and a performing unit 444 for performing the method as described above.

The UE 130 is configured to, e.g. by means of the **obtaining unit 441** within the UE 130 configured to, obtain the reporting configuration to report the power headroom to the base station 111. The reporting configuration comprises the plurality of reportable values, wherein each reportable value is configured to correspond to the respective range of values of the power headroom. The respective range of values of the power headroom each reportable value corresponds to is configured to be a function of the power class of the UE 130.

The UE 130 is also configured to, e.g. by means of the **reporting unit 442** within the UE 130 configured to, transmit, to the base station 111, the reportable value from the plurality of reportable values.

In some embodiments, the reporting configuration may comprise the reporting resolution, and the reporting resolution may be configured to be adapted as a function of the power class of the UE 130.

To obtain the reporting configuration to report power headroom may be configured to, e.g. by means of the **determining unit 443** within the UE 130 configured to, to further comprise determining the power class of the UE 130 and associating the power class of the UE 130 configured to be determined, with the reporting configuration to report power headroom.

In some embodiments, the reporting configuration may be further configured to be based on a coverage level the UE 130 is in.

The power class of the UE 130 may be 14 dBm.

In some embodiments, the reportable values may be configured to be comprised in two bits.

In some embodiments, the UE 130 may be configured to, e.g. by means of the obtaining unit 441 within the UE 130 further configured to, obtain the capability information of the UE 130 configured to indicate one of: a) that the UE 130 is capable of supporting at least two UE power classes, b) that the UE 130 is capable of supporting power class of 14 dBm, and c) the configuration from the base station 111 to operate with one of the at least two UE power classes supported by the UE 130.

In some embodiments, the UE 130 may be configured to, e.g. by means of a **performing unit 444** within the UE 130 configured to, perform, based on the reporting configuration configured to be determined, at least one radio measurement on signals configured to be received from and/or configured to be transmitted to the node.

The respective range of values of the power headroom configured to be indicated by the reportable value configured to be transmitted may comprise the measured power headroom.

Any of the obtaining unit 441, the reporting unit 442, the determining unit 443 and the performing unit 444 may be the processor 421 of the UE 130, or an application running on such processor.

In Figure 4b, the UE 130 is also illustrated comprising a communication unit 451. Through this unit, the UE 130 is adapted to communicate with other nodes, servers, wireless devices and/or entities in the communication network 100. The communication unit 451 may comprise more than one receiving arrangement. For example, the communication unit 451 may be connected to both a wire and an antenna, by means of which the UE 130 is enabled to communicate with other nodes and/or entities in the communication network 100. Similarly, the communication unit 451 may comprise more than one transmitting arrangement, which in turn is connected to both a wire and an antenna, by means of which the UE 130 is enabled to communicate with other nodes and/or entities in the communication network 100. The UE 130 further comprises a memory 452 for storing data. Further, the UE 130 may comprise a control or processing unit (not shown) which in turn is connected to the different units 441-444. It shall be pointed out that this is merely an illustrative example and the UE 130 may comprise more, less or other units or modules which execute the functions of the UE 130 in the same manner as the units illustrated in Figure 4b, e.g., the further functionality 459.

It should be noted that Figure 4b merely illustrates various functional units in the UE 130 in a logical sense. The functions in practice may be implemented using any suitable software and hardware means/circuits etc. Thus, the embodiments are generally not limited to the shown structures of the UE 130 and the functional units. Hence, the previously described exemplary embodiments may be realised in many ways. For example, one embodiment includes a computer-readable medium having instructions stored thereon that are executable by the control or processing unit for executing the method steps in the UE 130. The instructions executable by the computing system and stored on the computer-readable medium perform the method steps of UE 130 as set forth in the description above.

The UE 130 has the same possible advantages as the method performed by the UE 130. One possible advantage is that the reported PHR may better reflect the power headroom available in the UE compared to legacy solution. This may in turn improve the other procedures that use the result of the PHR reporting in the base station 111, e.g. a more suitable coding rate, modulation schemes and better resources that match the actual channel conditions are selected by the base station 111.

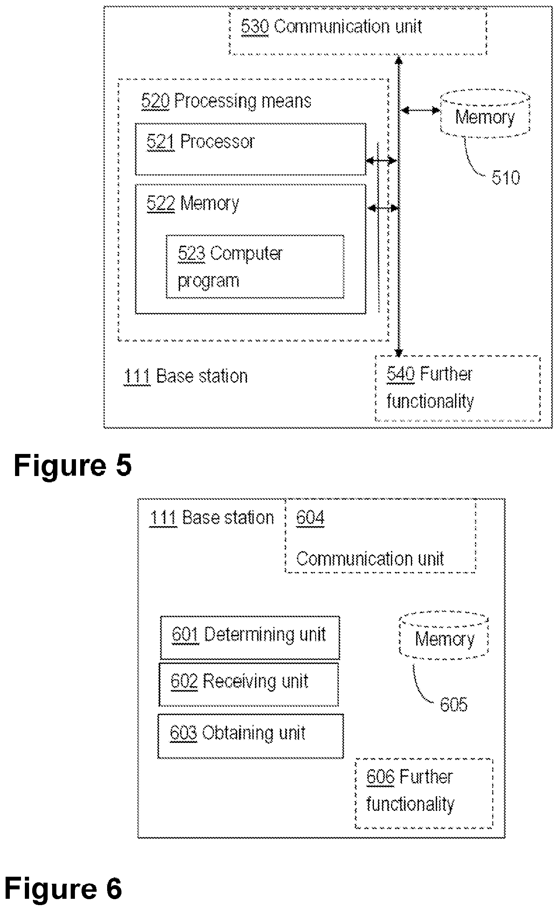

Embodiments herein also relate to a base station 111. Embodiments of such a base station 111 will now be described with reference to Figures 5 and 6. The base station 111 has the same technical features, objects and advantages as the method performed by the base station 111 described above. The base station 111 will therefore be described only in brief in order to avoid unnecessary repetition.

Figures 5 and 6 illustrate the base station 111 being configured for performing the different embodiments of the method as described above.

The base station 111 may be realised or implemented in different ways. One exemplifying implementation, or realisation, is illustrated in figure 5. Figure 5 illustrates the base station 111 comprising a processor 521 and memory 522, the memory comprising instructions, e.g. by means of a computer program 523, which when executed by the processor 521 causes the base station 111 to perform the different embodiments of the method as described above.

Figure 5 also illustrates the base station 111 comprising a memory 510. It shall be pointed out that Figure 5 is merely an exemplifying illustration and memory 510 may optionally, be a part of the memory 522 or be a further memory of the base station 111. The memory may for example comprise information relating to the base station 111, to statistics of operation of the base station 111, just to give a couple of illustrating examples. Figure 5 further illustrates the base station 111 comprising processing means 520, which comprises the memory 522 and the processor 521. Still further, Figure 5 illustrates the base station 111 comprising a communication unit 530. The communication unit 530 may comprise an interface through which the base station 111 communicates with other nodes, servers, wireless devices or entities of the communication network 100. Figure 5 also illustrates the base station 111 comprising further functionality 540. The further functionality 540 may comprise hardware of software necessary for the base station 111 to perform different tasks that are not disclosed herein.

Another implementation, or realisation, is illustrated in Figure 6. Figure 6 illustrates the base station 111 comprising an obtaining unit 601, a determining unit 602, and a receiving unit 603 for performing the method as described above.

The base station 111 is configured to, e.g. by means of the **determining unit 601** within the base station 111 configured to, determine the reporting configuration for the UE 130 to report the power headroom to the base station 111. The determining is configured to be based on the power class of the UE 130. The reporting configuration comprises the plurality of reportable values, wherein each reportable value is configured to correspond to the respective range of values of a power headroom. The respective range each reportable value is configured to correspond to, is configured to be a function of the power class of the UE 130.

The base station 111 is also configured to, e.g. by means of the **receiving unit 602** within the base station 111 configured to, receive, from the UE 130, the reportable value from the plurality of reportable values. The respective range of values of the power headroom configured to be indicated by the reportable value configured to be received, is based on the reporting configuration configured to be determined.

In some embodiments, the base station 111 may be configured to, e.g. by means of the receiving unit 602 within the base station 111 further configured to, use, based on the reporting configuration configured to be determined, the reportable value configured to be received for performing one or more operational tasks.

In some embodiments, the reporting configuration may comprise the reporting resolution, and the reporting resolution may be configured to be adapted as a function of the power class of the UE 130.

In some embodiments, the determining the reporting configuration for the UE 130 to report power headroom to the base station 111, may be further configured to comprise determining the power class of the UE 130 and associating the power class configured to be determined with the reporting configuration for the UE 130 to report power headroom to the base station 111.

The reporting configuration may be further configured to be based on the coverage level the UE 130 is in.

The power class of the base station 111 may be 14 dBm.

In some embodiments, the reportable values may be configured to be comprised in two bits.

In some embodiments, the base station 111 may be configured to, e.g. by means of an **obtaining unit 603** within the base station 111 configured to, obtain the capability information of the UE 130 configured to indicate one of: a) that the UE 130 is capable of supporting at least two UE power classes, and b) that the UE 130 is capable of supporting power class of 14 dBm.

In some embodiments wherein the capability information of the UE 130 may be configured to indicate that the UE 130 is capable of supporting at least two UE power classes, the base station 111 may be further configured to, e.g. by means of the determining unit 602 within the base station 111 further configured to, configure the UE 130 to operate with at least one of the UE power classes supported by the UE 130.

The respective range of values of the power headroom configured to be indicated by the reportable value configured to be received may be configured to comprise the measured power headroom.

Any of the determining unit 601, the receiving unit 602, and the obtaining unit 603 may be the processor 521 of the base station 111, or an application running on such processor.

In Figure 6, the base station 111 is also illustrated comprising a communication unit 604. Through this unit, the base station 111 is adapted to communicate with other nodes and/or entities in the communication network 100. The communication unit 604 may comprise more than one receiving arrangement. For example, the communication unit 604 may be connected to both a wire and an antenna, by means of which the base station 111 is enabled to communicate with other nodes, servers, wireless devices and/or entities in the communication network 100. Similarly, the communication unit 604 may comprise more than one transmitting arrangement, which in turn may be connected to both a wire and an antenna, by means of which the base station 111 is enabled to communicate with other nodes, servers, wireless devices and/or entities in the communication network. The base station 111 further comprises a memory 605 for storing data. Further, the base station 111 may comprise a control or processing unit (not shown) which in turn is connected to the different units 601-603. It shall be pointed out that this is merely an illustrative example and the base station 111 may comprise more, less or other units or modules which execute the functions of the base station 111 in the same manner as the units illustrated in Figure 6, e.g., the further functionality 606.

It should be noted that Figure 6 merely illustrates various functional units in the base station 111 in a logical sense. The functions in practice may be implemented using any suitable software and hardware means/circuits etc. Thus, the embodiments are generally not limited to the shown structures of the base station 111 and the functional units. Hence, the previously described exemplary embodiments may be realised in many ways. For example, one embodiment includes a computer-readable medium having instructions stored thereon that are executable by the control or processing unit for executing the method steps in the base station 111. The instructions executable by the computing system and stored on the computer-readable medium perform the method steps of base station 111 as set forth in the description above.

The first node has the same possible advantages as the method performed by the first node. One possible advantage is that the reported PHR may better reflect the power headroom available in the UE compared to legacy solution. This may in turn improve the other procedures that use the result of the PHR reporting in the base station 111, e.g. a more suitable coding rate, modulation schemes and better resources that match the actual channel conditions are selected by the base station 111.

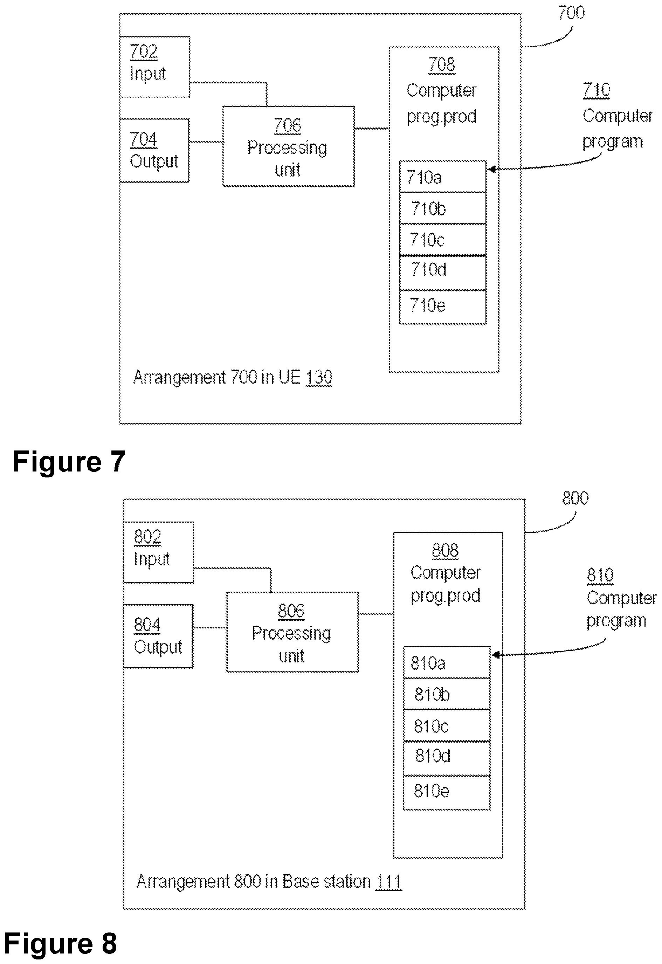

**Figure 7** schematically shows an embodiment of an arrangement 700 in the UE 130. Comprised in the arrangement 700 in the UE 130 are here a processing unit 706, e.g. with a Digital Signal Processor, DSP. The processing unit 706 may be a single unit or a plurality of units to perform different actions of procedures described herein. The arrangement 700 of the UE 130 may also comprise an input unit 702 for receiving signals from other entities, and an output unit 704 for providing signal(s) to other entities. The input unit and the output unit may be arranged as an integrated entity or as illustrated in the example of Figure 4, as one or more interfaces 401.

Furthermore, the arrangement 700 in the UE 130 comprises at least one computer program product 708 in the form of a non-volatile memory, e.g. an Electrically Erasable Programmable Read-Only Memory, EEPROM, a flash memory and a hard drive. The computer program product 708 comprises a computer program 710, which comprises code means, which when executed in the processing unit 706 in the arrangement 700 in the UE 130 causes the UE 130 to perform the actions e.g. of the procedure described earlier.

The computer program 710 may be configured as a computer program code structured in computer program modules 710a-710e. Hence, in an exemplifying embodiment, the code means in the computer program of the arrangement 700 in the UE 130 comprises an obtaining unit or module, a determining unit or module, a performing unit or module, and a reporting unit or module, for performing the method as described above.

The computer program modules could essentially perform the actions or steps of the method described, to emulate the UE 130. In other words, when the different computer program modules are executed in the processing unit 706, they may correspond to the units 441-444 of Figure 4.

**Figure 8** schematically shows an embodiment of an arrangement 800 in the base station 111 in a communication network 100. Comprised in the arrangement 800 in the base station 111 are here a processing unit 806, e.g. with a DSP. The processing unit 806 may be a single unit or a plurality of units to perform different actions of procedures described herein. The arrangement 800 in the base station 111 may also comprise an input unit 802 for receiving signals from other entities, and an output unit 804 for providing signal(s) to other entities. The input unit and the output unit may be arranged as an integrated entity or as illustrated in the example of Figure 6, as one or more interfaces 604.

Furthermore, the arrangement 800 in the base station 111 comprises at least one computer program product 808 in the form of a non-volatile memory, e.g. an EEPROM, a flash memory and a hard drive. The computer program product 808 comprises a computer program 810, which comprises code means, which when executed in the processing unit 806 in the arrangement 800 in the base station 111 in the communication network causes the base station 111 to perform the actions e.g. of the procedure described earlier.

The computer program 810 may be configured as a computer program code structured in computer program modules 810a-810e. Hence, in an exemplifying embodiment, the code means in the computer program of the arrangement 800 in the base station 111 comprises an obtaining unit or module, a determining unit or module, and a receiving unit, or module for performing the method as describe above.

The computer program modules could essentially perform the actions or steps of the method described above, to emulate base station 111 in the communication network 100. In other words, when the different computer program modules are executed in the processing unit 806, they may correspond to the units 601-603 of Figure 6.

Although the code means in the respective embodiments disclosed above in conjunction with **Figures 4** and **6** are implemented as computer program modules which when executed in the respective processing unit causes the UE 130 and the base station 111, respectively, to perform the actions described above in the conjunction with figures mentioned above, at least one of the code means may in alternative embodiments be implemented at least partly as hardware circuits.

The processor may be a single Central Processing Unit, CPU, but could also comprise two or more processing units. For example, the processor may include general purpose microprocessors; instruction set processors and/or related chips sets and/or special purpose microprocessors such as Application Specific Integrated Circuits, ASICs. The processor may also comprise board memory for caching purposes. The computer program may be carried by a computer program product connected to the processor. The computer program product may comprise a computer readable medium on which the computer program is stored. For example, the computer program product may be a flash memory, a Random-Access Memory RAM, Read-Only Memory, ROM, or an EEPROM, and the computer program modules described above could in alternative embodiments be distributed on different computer program products in the form of memories within the wireless device (UE) and the first node respectively.

It is to be understood that the choice of interacting units, as well as the naming of the units within this disclosure are only for exemplifying purpose, and nodes suitable to execute any of the methods described above may be configured in a plurality of alternative ways in order to be able to execute the suggested procedure actions.

It should also be noted that the units described in this disclosure are to be regarded as logical entities and not with necessity as separate physical entities.

While the embodiments have been described in terms of several embodiments, it is contemplated that alternatives, modifications, permutations and equivalents thereof will become apparent upon reading of the specifications and study of the drawings.

### *Further Examples related to embodiments herein*

Some further examples related to examples herein may comprise any of the following.

*Methods in a UE, e.g., the UE 130*

Methods in, or performed by, the UE 130 may comprise one or more of the steps of:

*Step* 1: Obtaining information that the UE 130 is capable of supporting at least two power classes, that is, the maximum power that may be used for transmitting signals in uplink;
*Step 2:* Determining at least one measurement reporting configuration associated with at least one of the power classes supported by the UE 130;
*Step 2a (optional):* selecting one of the already known or obtained reporting configurations based on the obtained information.
*Step 3:* Performing at least one measurement on signals received from and/or transmitted to a node, e.g., cell1 or another UE 130, UE 2;
*Step 4:* Reporting, or transmitting, the result of the performed measurement to a first node, e.g., network node and/or another UE, using the determined/selected reporting configuration.

*Methods in a node*

In this embodiment, the method is performed in a first node which serves or manages the UE 130, that performs at least one measurement on a second node 112 and reports the results to the first node. The term node herein may be a network node or another UE. The method in the first node may be summarized as follows:

Methods in a first node managing or serving a UE, such as the UE 130 may comprise the steps of:

*Step* 1: Obtaining UE 130 capability related to support of at least two power classes,

*Step 2 (optional):* Configuring the UE 130 to operate with one of the power classes supported by the UE 130,

*Step 3:* Determining based on the obtained information about the UE 130 capability to support at least two power classes in previous steps, a measurement reporting configuration to be used by the UE 130 for transmitting to the first node, the results of measurement performed by the UE 130,

*Step 4:* Receiving from the UE 130 results of one or more measurements based on at least one of the determined measurement reporting configuration,

*Step 5 (optional):* Using the determined reporting information and/or received reporting information indicating the results of the measurement for performing one or more operational tasks, e.g., adapting the scheduling, sending them to other nodes etc.

According to an aspect of the further examples related to embodiments herein, a method performed by a wireless device is provided. The method may comprise one or more of the following actions: Obtaining information that the UE is capable of a supporting at least two the power classes, that is, the maximum power that may be used for transmitting signals in uplink; Determining at least one measurement reporting configuration associated with at least one of the power classes supported by the UE; Performing at least one measurement on signals received from and/or transmitted to a node, e.g. cell1 or another UE, UE2; and/or Reporting, or transmitting, the result of the performed measurement to a first node, e.g., network node and/or another UE, using the determined/selected reporting configuration.

According to another aspect of the further examples related to embodiments herein, a method performed by a first node managing or serving a wireless device (UE) is provided. The method may comprise one or more of the following actions: Obtaining UE capability related to support of at least two power classes; Determining based on the obtained information about the UE capability to support at least two power classes in previous steps, a measurement reporting configuration to be used by the UE for transmitting to the first node, the results of measurement performed by the UE; and/or Receiving from the UE results of one or more measurements based on at least one of the determined measurement reporting configuration.

According to another aspect of the further examples related to embodiments herein, a wireless device is provided. The wireless device may be configured to perform one or more of the following actions: Obtaining information that the UE is capable of a supporting at least two the power classes, that is, the maximum power that may be used for transmitting signals in uplink; Determining at least one measurement reporting configuration associated with at least one of the power classes supported by the UE; Performing at least one measurement on signals received from and/or transmitted to a node, e.g. cell1 or another UE, UE2,; and/or Reporting, or transmitting, the result of the performed measurement to a first node, e.g., network node and/or another UE, using the determined/selected reporting configuration.

According to another aspect of the further examples related to embodiments herein, a first node managing or serving a wireless device (UE) is provided. The first node may be configured to perform one or more of the following actions: Obtaining UE capability related to support of at least two power classes; Determining based on the obtained information about the UE capability to support at least two power classes in previous steps, a measurement reporting configuration to be used by the UE for transmitting to the first node, the results of measurement performed by the UE; and/or Receiving from the UE results of one or more measurements based on at least one of the determined measurement reporting configuration.

In one example the first node (Node1) and the second node 112 (Node2) may be different e.g., the UE performs measurement on neighbour cell 122 and report results to the serving cell 121.

In another example the first node (Node1) and the second node 112 (Node2) may be the same e.g., the UE performs measurement on a serving cell 121 and report results to the same serving cell 121.

With respect to Technical Specification 36.133 v14.2.0, the following may be proposed:

9.1.23.3 Report Mapping for UE Category NB1

9.1.23.3.1 Report Mapping for UE Category NB1 in normal coverage

The power headroom reporting range is from -23 ...+11 dB for UE category NB1 in normal coverage for UE power class 3 (PC3) and UE power class 5 (PC5) [5]. The power headroom reporting range is from -14 ...+11 dB for UE category NB1 in normal coverage for UE power class of 14 dBm. **Table 9.1.23.3.1-1** and **Table 9.1.23.3.1-2** define the report mapping which is applicable when the enhanced coverage level 0 is selected during random access procedure [17].

**Table 9.1.23.3-1: Power headroom report mapping for UE category NB1 in normal coverage for UE PC3 and UE PC5**

| Reported value | Measured quantity value (dB) |
|---|---|
| POWER_HEADROOM_0 | $-23 \leq PH < 5$ |
| POWER_HEADROOM_1 | $5 \leq PH < 8$ |
| POWER_HEADROOM_2 | $8 \leq PH < 11$ |
| POWER_HEADROOM_3 | $PH \geq 11$ |

**Table 9.1.23.3-2: Power headroom report mapping for UE category NB1 in normal coverage for UE power class of 14 dBm**

| Reported value | Measured quantity value (dB) |
|---|---|
| POWER_HEADROOM_0 | $-14 \leq PH < 7$ |
| POWER_HEADROOM_1 | $7 \leq PH < 9$ |
| POWER_HEADROOM_2 | $9 \leq PH < 11$ |
| POWER_HEADROOM_3 | $PH \geq 11$ |

9.1.23.3.2 Report Mapping for UE Category NB1 in enhanced coverage

The power headroom reporting range is from -23 ...+6 dB for UE category NB1 in enhanced coverage for UE power class 3 (PC3) and UE power class 5 (PC5) [5]. The power headroom reporting range is from -14 ...+6 dB for UE category NB1 in enhanced coverage for UE power class of 14 dBm [5]. Table 9.1.23.3.2-1 and Table 9.1.23.3.2-2 define the report mapping which is applicable when the enhanced coverage level other than 0 is selected during random access procedure [17].

**Table 9.1.23.3.2-1: NB-IOT power headroom report mapping in enhanced coverage for UE PC3 and UE PC5**

| Reported value | Measured quantity value (dB) |
|---|---|
| POWER_HEADROOM_0 | $-23 \leq PH < -10$ |
| POWER_HEADROOM_1 | $-10 \leq PH < -2$ |
| POWER_HEADROOM_2 | $-2 \leq PH < 6$ |
| POWER_HEADROOM_3 | $PH \geq 6$ |

**Table 9.1.23.3.2-2: NB-IOT power headroom report mapping in enhanced coverage for UE power class of 14 dBm**

| Reported value | Measured quantity value (dB) |
|---|---|
| POWER_HEADROOM_0 | $-14 \leq PH < -10$ |
| POWER_HEADROOM_1 | $-10 \leq PH < -2$ |
| POWER_HEADROOM_2 | $-2 \leq PH < 6$ |
| POWER_HEADROOM_3 | $PH \geq 6$ |

**Claims**

1. A method performed by a base station (111), the method comprising:

- *determining* (203) a reporting configuration for a UE (130) to report power headroom to the base station (111), and

**characterized in that**

the determining (203) being based on a power class of the UE (130), wherein the reporting configuration comprises a plurality of reportable values, wherein each reportable value corresponds to a respective range of values of a power headroom, and wherein the respective range each reportable value corresponds to is a function of a power class of the UE (130), the method further comprising:

- *receiving* (204), from the UE (130), a reportable value from the plurality of reportable values, and wherein the respective range of values of the power headroom indicated by the received reportable value is based on the determined reporting configuration.

2. The method according to claim 1, the method comprising:

- *using* (205), based on the determined reporting configuration, the received reportable value for performing one or more operational tasks.

3. The method according to any of claims 1-2, wherein the reporting configuration comprises a reporting resolution, and wherein the reporting resolution is adapted as a function of the power class of the UE (130).

4. The method according to any of the claims 1-3, wherein the determining (203) the reporting configuration for the UE (130) to report power headroom to the base station (111), further comprises determining the power class of the UE (130) and associating the determined power class with the reporting configuration for the UE (130) to report power headroom to the base station (111).

5. The method according to any of claims 1-4, wherein the reporting configuration is further based on a coverage level the UE (130) is in.

6. The method according to any of claims 1-5, wherein the power class of the UE (130) is 14 dBm.

7. The method according to any of claims 1-6, wherein the reportable values are comprised in two bits.

8. The method according to any of claims 1-7, the method further comprising:

- *obtaining* (201) a capability information of the UE (130) indicating one of:

a. that the UE (130) is capable of supporting at least two UE power classes, and
b. that the UE (130) is capable of supporting power class of 14 dBm.

9. The method according to claim 8, wherein the capability information of the UE (130) indicates that the UE (130) is capable of supporting at least two UE power classes, and wherein the method further comprises:

- *configuring* (202) the UE (130) to operate with at least one of the UE power classes supported by the UE (130).

10. The method according to any of claims 1-9, wherein the respective range of values of the power headroom indicated by the received reportable value comprises a measured power headroom.

11. A method performed by a UE (130), the method comprising:

- *obtaining* (302) a reporting configuration to report power headroom to a base station (111), wherein the reporting configuration comprises a plurality of reportable values, wherein each reportable value corresponds to a respective range of values of a power headroom,

**characterized in that**

the respective range of values of the power headroom each reportable value corresponds to is a function of a power class of the UE (130), and
the method further comprising:

- *transmitting* (304), to the base station (111), a reportable value from the plurality of reportable values.

**12.** The method according to claim 11, wherein the reporting configuration comprises a reporting resolution, and wherein the reporting resolution is adapted as a function of the power class of the UE (130).

**13.** The method according to any of the claims 11-12, wherein the obtaining (302) the reporting configuration to report power headroom further comprises determining the power class of the UE (130) and associating the determined power class of the UE (130) with the reporting configuration to report power headroom.

**14.** The method according to any of claims 11-13, wherein the reporting configuration is further based on a coverage level the UE (130) is in.

**15.** The method according to any of claims 11-14, wherein the power class of the UE (130) is 14 dBm.

**16.** The method according to any of claims 11-15, wherein the reportable values are comprised in two bits.

**17.** The method according to any of claims 11-16, the method further comprising:

- *obtaining* (301) a capability information of the UE (130) indicating one of:

a. that the UE (130) is capable of supporting at least two UE power classes,
b. that the UE (130) is capable of supporting power class of 14 dBm, and
c. a configuration from the base station (111) to operate with one of the at least two UE power classes supported by the UE (130).

**18.** The method according to any of claims 11-17, the method further comprising:

- *performing* (303), based on the determined reporting configuration, at least one radio measurement on signals received from and/or transmitted to a node.

**19.** The method according to any of claims 11-18, wherein the respective range of values of the power headroom indicated by the transmitted reportable value comprises a measured power headroom.

**20.** A base station (111) configured to:

- determine a reporting configuration for a UE (130) to report power headroom to the base station (111), and

**characterized in that**

the determining being configured to be based on a power class of the UE (130), wherein the reporting configuration comprises a plurality of reportable values, wherein each reportable value is configured to correspond to a respective range of values of a power headroom, and wherein the respective range each reportable value is configured to correspond to, is configured to be a function of a power class of the UE (130), and
the base station is further configured to:

- receive, from the UE (130), a reportable value from the plurality of reportable values, and wherein the respective range of values of the power headroom configured to be indicated by the reportable value configured to be received, is based on the reporting configuration configured to be determined.

**21.** The base station (111) according to claim 20, the base station (111) being further configured to:

- use, based on the reporting configuration configured to be determined, the reportable value configured to be received for performing one or more operational tasks.

22. The base station (111) according to any of claims 20-21, wherein the reporting configuration comprises a reporting resolution, and wherein the reporting resolution is configured to be adapted as a function of the power class of the UE (130).

23. The base station (111) according to any of the claims 20-22, wherein the determining the reporting configuration for the UE (130) to report power headroom to the base station (111), is further configured to comprise determining the power class of the UE (130) and associating the power class configured to be determined with the reporting configuration for the UE (130) to report power headroom to the base station (111).

24. The base station (111) according to any of claims 20-23, wherein the reporting configuration is further configured to be based on a coverage level the UE (130) is in.

25. The base station (111) according to any of claims 20-24, wherein the power class of the UE (130) is 14 dBm.

26. The base station (111) according to any of claims 20-25, the base station (111) being further configured to:

- obtain a capability information of the UE (130) configured to indicate one of:

a. that the UE (130) is capable of supporting at least two UE power classes, and
b. that the UE (130) is capable of supporting power class of 14 dBm.

27. The base station (111) according to claim 26, wherein the capability information of the UE (130) is configured to indicate that the UE (130) is capable of supporting at least two UE power classes, and wherein the base station (111) is further configured to:

- configure the UE (130) to operate with at least one of the UE power classes supported by the UE (130).

28. The base station (111) according to any of claims 20-27, wherein the respective range of values of the power headroom configured to be indicated by the reportable value configured to be received is configured to comprise a measured power headroom.

29. A UE (130) configured to:

- obtain a reporting configuration to report power headroom to a base station (111), wherein the reporting configuration comprises a plurality of reportable values, wherein each reportable value is configured to correspond to a respective range of values of a power headroom,

**characterized in that**

the respective range of values of the power headroom each reportable value corresponds to, is configured to be a function of a power class of the UE (130), and
the UE is further configured to:

- transmit, to the base station (111), a reportable value from the plurality of reportable values.

30. The UE (130) according to claim 29, wherein the reporting configuration comprises a reporting resolution, and wherein the reporting resolution is configured to be adapted as a function of the power class of the UE (130).

31. The UE (130) according to any of the claims 29-30, wherein to obtain the reporting configuration to report power headroom is configured to further comprise determining the power class of the UE (130) and associating the power class of the UE (130) configured to be determined, with the reporting configuration to report power headroom.

32. The UE (130) according to any of claims 29-31, wherein the reporting configuration is further configured to be based on a coverage level the UE (130) is in.

33. The UE (130) according to any of claims 29-32, wherein the power class of the UE (130) is 14 dBm.

34. The UE (130) according to any of claims 29-33, being further configured to:

- obtain a capability information of the UE (130) configured to indicate one of:

    a. that the UE (130) is capable of supporting at least two UE power classes,
    b. that the UE (130) is capable of supporting power class of 14 dBm, and
    c. a configuration from the base station (111) to operate with one of the at least two UE power classes supported by the UE (130).

**35.** The UE (130) according to any of claims 29-34, the UE (130) being further configured to:

- perform, based on the reporting configuration configured to be determined, at least one radio measurement on signals configured to be received from and/or configured to be transmitted to a node.

**Patentansprüche**

**1.** Verfahren, das von einer Basisstation (111) durchgeführt wird, wobei das Verfahren Folgendes umfasst:

- Bestimmen (203) einer Meldekonfiguration für ein Benutzergerät (130) zum Melden von Leistungsreserven an die Basisstation (111), und

**dadurch gekennzeichnet, dass**

das Bestimmen (203) auf einer Leistungsklasse des Benutzergeräts (130) basiert, wobei die Meldekonfiguration eine Vielzahl von meldepflichtigen Werten umfasst, wobei jeder meldepflichtige Wert einem jeweiligen Wertebereich einer Leistungsreserve entspricht und wobei der jeweilige Bereich, dem jeder meldepflichtige Wert entspricht, von einer Leistungsklasse des Benutzergeräts (130) abhängt,
wobei das Verfahren ferner Folgendes umfasst:

- Empfangen (204) eines meldepflichtigen Wertes aus der Vielzahl meldepflichtiger Werte von dem Benutzergerät (130), und wobei der jeweilige Wertebereich der Leistungsreserve, der durch den empfangenen meldepflichtigen Wert angegeben wird, auf der bestimmten Meldekonfiguration basiert.

**2.** Verfahren nach Anspruch 1, wobei das Verfahren Folgendes umfasst:

- Verwenden (205) des empfangenen meldepflichtigen Wertes auf Basis der bestimmten Meldekonfiguration zum Durchführen einer oder mehrerer Betriebsaufgaben.

**3.** Verfahren nach einem der Ansprüche 1 bis 2, wobei die Meldekonfiguration eine Meldeauflösung umfasst und wobei die Meldeauflösung in Abhängigkeit von der Leistungsklasse des Benutzergeräts (130) angepasst wird.

**4.** Verfahren nach einem der Ansprüche 1 bis 3, wobei das Bestimmen (203) der Meldekonfiguration für das Benutzergerät (130) zum Melden von Leistungsreserven an die Basisstation (111) ferner ein Bestimmen der Leistungsklasse des Benutzergeräts (130) und ein Zuordnen der bestimmten Leistungsklasse zu der Meldekonfiguration für das Benutzergerät (130) zum Melden von Leistungsreserven an die Basisstation (111) umfasst.

**5.** Verfahren nach einem der Ansprüche 1 bis 4, wobei die Meldekonfiguration ferner auf einer Abdeckungsebene basiert, in der sich das Benutzergerät (130) befindet.

**6.** Verfahren nach einem der Ansprüche 1 bis 5, wobei die Leistungsklasse des Benutzergeräts (130) 14 dBm ist.

**7.** Verfahren nach einem der Ansprüche 1 bis 6, wobei die meldepflichtigen Werte in zwei Bits enthalten sind.

**8.** Verfahren nach einem der Ansprüche 1 bis 7, wobei das Verfahren ferner Folgendes umfasst:

- Erhalten (201) einer Fähigkeitsinformation des Benutzergeräts (130), die eines des Folgenden angibt:

    a. dass das Benutzergerät (130) in der Lage ist, mindestens zwei Benutzergeräteleistungsklassen zu unterstützen, und

b. dass das Benutzergerät(130) in der Lage ist, eine Leistungsklasse von 14 dBm zu unterstützen.

9. Verfahren nach Anspruch 8, wobei die Fähigkeitsinformation des Benutzergeräts (130) angibt, dass das Benutzergerät (130) in der Lage ist, mindestens zwei Benutzergeräteleistungsklassen zu unterstützen, und wobei das Verfahren ferner Folgendes umfasst:

- Konfigurieren (202) des Benutzergeräts (130) für den Betrieb mit mindestens einer der von dem Benutzergerät (130) unterstützten Benutzergeräteleistungsklassen.

10. Verfahren nach einem der Ansprüche 1 bis 9, wobei der jeweilige Wertebereich der durch den empfangenen meldepflichtigen Wert angegebenen Leistungsreserve eine gemessene Leistungsreserve umfasst.

11. Verfahren, das von einem Benutzergerät (130) durchgeführt wird, wobei das Verfahren Folgendes umfasst:

- Erhalten (302) einer Meldekonfiguration, um eine Leistungsreserve an eine Basisstation (111) zu melden, wobei die Meldekonfiguration eine Vielzahl meldepflichtiger Werte umfasst, wobei jeder meldepflichtige Wert einem jeweiligen Wertebereich einer Leistungsreserve entspricht,

**dadurch gekennzeichnet, dass**

der jeweilige Wertebereich der Leistungsreserve, dem jeder meldepflichtige Wert entspricht, von einer Leistungsklasse des Benutzergeräts (130) abhängt, und
wobei das Verfahren ferner Folgendes umfasst:

- Übertragen (304) eines meldepflichtigen Wertes aus der Vielzahl meldepflichtiger Werte an die Basisstation (111).

12. Verfahren nach Anspruch 11, wobei die Meldekonfiguration eine Meldeauflösung umfasst und wobei die Meldeauflösung in Abhängigkeit von der Leistungsklasse des Benutzergeräts (130) angepasst wird.

13. Verfahren nach einem der Ansprüche 11 bis 12, wobei das Erhalten (302) der Meldekonfiguration zum Melden von Leistungsreserven ferner ein Bestimmen der Leistungsklasse des Benutzergeräts (130) und ein Zuordnen der bestimmten Leistungsklasse des Benutzergeräts (130) zu der Meldekonfiguration zum Melden von Leistungsreserven umfasst.

14. Verfahren nach einem der Ansprüche 11 bis 13, wobei die Meldekonfiguration ferner auf einer Abdeckungsebene basiert, in der sich das Benutzergerät (130) befindet.

15. Verfahren nach einem der Ansprüche 11 bis 14, wobei die Leistungsklasse des Benutzergeräts (130) 14 dBm ist.

16. Verfahren nach einem der Ansprüche 11 bis 15, wobei die meldepflichtigen Werte in zwei Bits enthalten sind.

17. Verfahren nach einem der Ansprüche 11 bis 16, wobei das Verfahren ferner Folgendes umfasst:

- Erhalten (301) einer Fähigkeitsinformation des Benutzergeräts (130), die eines des Folgenden angibt:

a. dass das Benutzergerät (130) in der Lage ist, mindestens zwei Benutzergeräteleistungsklassen zu unterstützen,
b. dass das Benutzergerät (130) in der Lage ist, eine Leistungsklasse von 14 dBm zu unterstützen, und
c. eine Konfiguration von der Basisstation (111), um mit einer der mindestens zwei Benutzergeräteleistungsklassen zu arbeiten, die von dem Benutzergerät(130) unterstützt werden.

18. Verfahren nach einem der Ansprüche 11 bis 17, wobei das Verfahren ferner Folgendes umfasst:

- Durchführen (303) von mindestens einer Funkmessung an Signalen, die von einem Knoten empfangen und/oder an ihn gesendet werden, auf Basis der bestimmten Meldekonfiguration.

19. Verfahren nach einem der Ansprüche 11 bis 18, wobei der jeweilige Wertebereich der durch den übermittelten meldepflichtigen Wert angegebenen Leistungsreserve eine gemessene Leistungsreserve umfasst.

20. Basisstation (111), die für Folgendes konfiguriert ist:

- Bestimmen einer Meldekonfiguration für ein Benutzergerät (130), um Leistungsreserven an die Basisstation (111) zu melden, und

**dadurch gekennzeichnet, dass**

die Bestimmung konfiguriert ist, um auf einer Leistungsklasse des Benutzergeräts (130) zu basieren, wobei die Meldekonfiguration eine Vielzahl meldepflichtiger Werte umfasst, wobei jeder meldepflichtige Wert konfiguriert ist, um einem jeweiligen Wertebereich einer Leistungsreserve zu entsprechen, und wobei der jeweilige Bereich, für den jeder meldepflichtige Wert konfiguriert ist, um ihm zu entsprechen, konfiguriert ist, um von einer Leistungsklasse des Benutzergeräts (130) abzuhängen, und
die Basisstation ferner für Folgendes konfiguriert ist:

- Empfangen eines meldepflichtigen Wertes aus der Vielzahl meldepflichtiger Werte von dem Benutzergerät (130), und wobei der jeweilige Wertebereich der Leistungsreserve, der konfiguriert ist, um durch den meldepflichtigen Wert, der konfiguriert ist, um empfangen zu werden, angezeigt zu werden, auf der Meldekonfiguration basiert, die konfiguriert ist, um bestimmt zu werden.

21. Basisstation (111) nach Anspruch 20, wobei die Basisstation (111) ferner für Folgendes konfiguriert ist:

- Verwenden des meldepflichtigen Wertes, der konfiguriert ist, um empfangen zu werden, auf Basis der Meldekonfiguration, die konfiguriert ist, um bestimmt zu werden, zur Durchführung einer oder mehrerer Betriebsaufgaben.

22. Basisstation (111) nach einem der Ansprüche 20 bis 21, wobei die Meldekonfiguration eine Meldeauflösung umfasst und wobei die Meldeauflösung konfiguriert ist, um in Abhängigkeit von der Leistungsklasse des Benutzergeräts (130) angepasst zu werden.

23. Basisstation (111) nach einem der Ansprüche 20 bis 22, wobei das Bestimmen der Meldekonfiguration für das Benutzergerät (130) zum Melden von Leistungsreserven an die Basisstation (111) ferner konfiguriert ist, um ein Bestimmen der Leistungsklasse des Benutzergeräts (130) und ein Zuordnen der Leistungsklasse, die konfiguriert ist, um bestimmt zu werden, zu der Meldekonfiguration für das Benutzergerät (130) zum Melden von Leistungsreserven an die Basisstation (111) zu umfassen.

24. Basisstation (111) nach einem der Ansprüche 20 bis 23, wobei die Meldekonfiguration ferner konfiguriert ist, um auf einer Abdeckungsebene zu basieren, in der sich das Benutzergerät (130) befindet.

25. Basisstation (111) nach einem der Ansprüche 20 bis 24, wobei die Leistungsklasse des Benutzergeräts (130) 14 dBm ist.

26. Basisstation (111) nach einem der Ansprüche 20 bis 25, wobei die Basisstation (111) ferner für Folgendes konfiguriert ist:

- Erhalten einer Fähigkeitsinformation des Benutzergeräts (130), die konfiguriert ist, um eines des Folgenden anzugeben:

a. dass das Benutzergerät (130) in der Lage ist, mindestens zwei Benutzergeräteleistungsklassen zu unterstützen, und
b. dass das Benutzergerät (130) in der Lage ist, eine Leistungsklasse von 14 dBm zu unterstützen.

27. Basisstation (111) nach Anspruch 26, wobei die Fähigkeitsinformation des Benutzergeräts (130) konfiguriert ist, um anzugeben, dass das Benutzergerät (130) in der Lage ist, mindestens zwei Benutzergeräteleistungsklassen zu unterstützen, und wobei die Basisstation (111) ferner für Folgendes konfiguriert ist:

- Konfigurieren des Benutzergeräts (130), um mit mindestens einer der von dem Benutzergerät (130) unterstützten Benutzergeräteleistungsklassen zu arbeiten.

28. Basisstation (111) nach einem der Ansprüche 20 bis 27, wobei der jeweilige Wertebereich der Leistungsreserve, der konfiguriert ist, um durch den meldepflichtigen Wert, der konfiguriert ist, um empfangen zu werden, angegeben zu werden, konfiguriert ist, um eine gemessene Leistungsreserve zu umfassen.

29. Benutzergerät (130), das für Folgendes konfiguriert ist:

- Erhalten einer Meldekonfiguration, um die Leistungsreserve an eine Basisstation (111) zu melden, wobei die Meldekonfiguration eine Vielzahl meldepflichtiger Werte umfasst, wobei jeder meldepflichtige Wert konfiguriert ist, um einem jeweiligen Wertebereich einer Leistungsreserve zu entsprechen,

**dadurch gekennzeichnet, dass**
der jeweilige Wertebereich der Leistungsreserve, dem jeder meldepflichtige Wert entspricht, konfiguriert ist, um von einer Leistungsklasse des Benutzergeräts (130) abzuhängen, und das Benutzergerät ferner für Folgendes konfiguriert ist:

- Senden eines meldepflichtigen Wertes aus der Vielzahl meldepflichtiger Werte an die Basisstation (111).

30. Benutzergerät (130) nach Anspruch 29, wobei die Meldekonfiguration eine Meldeauflösung umfasst und wobei die Meldeauflösung konfiguriert ist, um in Abhängigkeit von der Leistungsklasse des Benutzergeräts (130) angepasst zu werden.

31. Benutzergerät (130) nach einem der Ansprüche 29 bis 30, wobei das Erhalten der Meldekonfiguration zum Melden der Leistungsreserve konfiguriert ist, um ferner ein Bestimmen der Leistungsklasse des Benutzergeräts (130) und ein Zuordnen der Leistungsklasse des Benutzergeräts (130), die konfiguriert ist, um bestimmt zu werden, zu der Meldekonfiguration zum Melden der Leistungsreserve zu umfassen.

32. Benutzergerät (130) nach einem der Ansprüche 29 bis 31, wobei die Meldekonfiguration ferner konfiguriert ist, um auf einer Abdeckungsebene zu basieren, in der sich das Benutzergerät (130) befindet.

33. Benutzergerät (130) nach einem der Ansprüche 29 bis 32, wobei die Leistungsklasse des Benutzergeräts (130) 14 dBm ist.

34. Benutzergerät (130) nach einem der Ansprüche 29 bis 33, das ferner für Folgendes konfiguriert ist:

- Erhalten einer Fähigkeitsinformation des Benutzergeräts (130), die konfiguriert ist, um eines des Folgenden anzugeben:

a. dass das Benutzergerät (130) in der Lage ist, mindestens zwei Benutzergeräteleistungsklassen zu unterstützen,
b. dass das Benutzergerät (130) in der Lage ist, eine Leistungsklasse von 14 dBm zu unterstützen, und
c. eine Konfiguration von der Basisstation (111), um mit einer der mindestens zwei Benutzergeräteleistungsklassen zu arbeiten, die von dem Benutzergerät (130) unterstützt werden.

35. Benutzergerät (130) nach einem der Ansprüche 29 bis 34, wobei das Benutzergerät (130) ferner für Folgendes konfiguriert ist:

- Durchführen, auf Basis der Meldekonfiguration, die konfiguriert ist, um bestimmt zu werden, mindestens einer Funkmessung an Signalen, die konfiguriert sind, um von einem Knoten empfangen zu werden und/oder um an einen Knoten gesendet zu werden.

**Revendications**

1. Procédé exécuté par une station de base (111), le procédé comprenant :

- *la détermination* (203) d'une configuration de rapport pour qu'un UE (130) rapporte une marge de puissance à la station de base (111), et

**caractérisé en ce que**

la détermination (203) étant basée sur une classe de puissance de l'UE (130), dans laquelle la configuration de rapport comprend une pluralité de valeurs rapportables, dans laquelle chaque valeur rapportable correspond à une plage respective de valeurs d'une marge de puissance, et dans laquelle la plage respective à laquelle chaque valeur rapportable correspond est une fonction d'une classe de puissance de l'UE (130), le procédé comprenant en outre :

- *la réception* (204), à partir de l'UE (130), d'une valeur rapportable parmi la pluralité de valeurs rapportables, et dans laquelle la plage respective de valeurs de la marge de puissance indiquée par la valeur rapportable reçue est basée sur la configuration de rapport déterminée.

2. Procédé selon la revendication 1, le procédé comprenant :

- *l'utilisation* (205), sur la base de la configuration de rapport déterminée, de la valeur rapportable reçue pour effectuer une ou plusieurs tâches opérationnelles.

3. Procédé selon l'une quelconque des revendications 1 à 2, dans lequel la configuration de rapport comprend une résolution de rapport, et dans lequel la résolution de rapport est adaptée en fonction de la classe de puissance de l'UE (130).

4. Procédé selon l'une quelconque des revendications 1 à 3, dans lequel la détermination (203) de la configuration de rapport pour l'UE (130) pour rapporter la marge de puissance à la station de base (111), comprend en outre la détermination de la classe de puissance de l'UE (130) et l'association de la classe de puissance déterminée avec la configuration de rapport pour l'UE (130) pour rapporter la marge de puissance à la station de base (111).

5. Procédé selon l'une quelconque des revendications 1 à 4, dans lequel la configuration de rapport est en outre basée sur un niveau de couverture dans lequel se trouve l'UE (130).

6. Procédé selon l'une quelconque des revendications 1 à 5, dans lequel la classe de puissance de l'UE (130) est de 14 dBm.

7. Procédé selon l'une quelconque des revendications 1 à 6, dans lequel les valeurs rapportables sont comprises dans deux bits.

8. Procédé selon l'une quelconque des revendications 1 à 7, le procédé comprenant en outre :

- *l'obtention* (201) d'une information de capacité de l'UE (130) indiquant l'un parmi :

a. que l'UE (130) est capable de supporter au moins deux classes de puissance d'UE, et
b. que l'UE (130) est capable de supporter une classe de puissance de 14 dBm.

9. Procédé selon la revendication 8, dans lequel l'information de capacité de l'UE (130) indique que l'UE (130) est capable de supporter au moins deux classes de puissance d'UE, et dans lequel le procédé comprend en outre :

- *la configuration* (202) de la UE (130) pour fonctionner avec au moins une des classes de puissance d'UE supportées par l'UE (130) .

10. Procédé selon l'une quelconque des revendications 1 à 9, dans lequel la plage respective de valeurs de la marge de puissance indiquée par la valeur rapportable reçue comprend une marge de puissance mesurée.

11. Procédé exécuté par un UE (130), le procédé comprenant :

- *l'obtention* (302) d'une configuration de rapport pour rapporter une marge de puissance à une station de base (111), dans laquelle la configuration de rapport comprend une pluralité de valeurs rapportables, dans laquelle chaque valeur rapportable correspond à une plage respective de valeurs d'une marge de puissance,

**caractérisé en ce que** la plage respective de valeurs de la marge de puissance à laquelle chaque valeur rapportable correspond est une fonction d'une classe de puissance de l'UE (130), et
le procédé comprenant en outre :

- *la transmission* (304), à la station de base (111), d'une valeur rapportable parmi la pluralité de valeurs rapportables.

12. Procédé selon la revendication 11, dans lequel la configuration de rapport comprend une résolution de rapport, et dans lequel la résolution de rapport est adaptée en fonction de la classe de puissance de l'UE (130).

13. Procédé selon l'une quelconque des revendications 11 à 12, dans lequel l'obtention (302) de la configuration de rapport pour rapporter la marge de puissance comprend en outre la détermination de la classe de puissance de l'UE (130) et l'association de la classe de puissance déterminée de l'UE (130) avec la configuration de rapport pour rapporter la marge de puissance.

14. Procédé selon l'une quelconque des revendications 11 à 13, dans lequel la configuration de rapport est en outre basée sur un niveau de couverture dans lequel se trouve l'UE (130).

15. Procédé selon l'une quelconque des revendications 11 à 14, dans lequel la classe de puissance de l'UE (130) est de 14 dBm.

16. Procédé selon l'une quelconque des revendications 11 à 15, dans lequel les valeurs rapportables sont comprises dans deux bits.

17. Procédé selon l'une quelconque des revendications 11 à 16, le procédé comprenant en outre :

- *l'obtention* (301) d'une information de capacité de l'UE (130) indiquant l'un parmi :

a. que l'UE (130) est capable de supporter au moins deux classes de puissance d'UE,
b. que l'UE (130) est capable de supporter une classe de puissance de 14 dBm, et
c. une configuration de la station de base (111) pour fonctionner avec l'une des au moins deux classes de puissance d'UE prises supportées par l'UE (130).

18. Procédé selon l'une quelconque des revendications 11 à 17, le procédé comprenant en outre :

- *l'exécution* (303), sur la base de la configuration de rapport déterminée, d'au moins une mesure radio sur des signaux reçus depuis et/ou transmis vers un nœud.

19. Procédé selon l'une quelconque des revendications 11 à 18, dans lequel la plage respective de valeurs de la marge de puissance indiquée par la valeur rapportable transmise comprend une marge de puissance mesurée.

20. Station de base (111) configurée pour :

- déterminer une configuration de rapport pour qu'un UE (130) rapporte une marge de puissance à la station de base (111), et

**caractérisée en ce que**
la détermination étant configurée pour être basée sur une classe de puissance de l'UE (130), dans laquelle la configuration de rapport comprend une pluralité de valeurs rapportables, dans laquelle chaque valeur rapportable est configurée pour correspondre à une plage respective de valeurs d'une marge de puissance, et dans laquelle la plage respective à laquelle chaque valeur rapportable est configurée pour correspondre, est configurée pour être une fonction d'une classe de puissance de l'UE (130), et la station de base est en outre configurée pour

- recevoir, à partir de l'UE (130), une valeur rapportable parmi la pluralité de valeurs rapportables, et dans lequel la plage respective de valeurs de la marge de puissance configurée pour être indiquée par la valeur rapportable configurée pour être reçue, est basée sur la configuration de rapport configurée pour être déterminée.

**21.** Station de base (111) selon la revendication 20, la station de base (111) étant en outre configurée pour :

- utiliser, sur la base de la configuration de rapport configurée pour être déterminée, la valeur rapportable configurée pour être reçue pour effectuer une ou plusieurs tâches.

**22.** Station de base (111) selon l'une quelconque des revendications 20 à 21, dans laquelle la configuration de rapport comprend une résolution de rapport, et dans laquelle la résolution de rapport est configurée pour être adaptée en fonction de la classe de puissance de l'UE (130).

**23.** Station de base (111) selon l'une quelconque des revendications 20 à 22, dans laquelle la détermination de la configuration de rapport pour l'UE (130) pour rapporter la marge de puissance à la station de base (111), est en outre configurée pour comprendre la détermination de la classe de puissance de l'UE (130) et l'association de la classe de puissance configurée pour être déterminée avec la configuration de rapport pour l'UE (130) pour rapporter la marge de puissance à la station de base (111) .

**24.** Station de base (111) selon l'une quelconque des revendications 20 à 23, dans laquelle la configuration de rapport est en outre configurée pour être basée sur un niveau de couverture dans lequel se trouve l'UE (130).

**25.** Station de base (111) selon l'une quelconque des revendications 20 à 24, dans laquelle la classe de puissance de l'UE (130) est de 14 dBm.

**26.** Station de base (111) selon l'une quelconque des revendications 20 à 25, la station de base (111) étant en outre configurée pour :

- obtenir une information de capacité de l'UE (130) configurée pour indiquer l'un parmi :

a. que l'UE (130) est capable de supporter au moins deux classes de puissance d'UE, et
b. que l'UE (130) est capable de supporter une classe de puissance de 14 dBm.

**27.** Station de base (111) selon la revendication 26, dans laquelle l'information de capacité de l'UE (130) est configurée pour indiquer que l'UE (130) est capable de supporter au moins deux classes de puissance d'UE, et dans laquelle la station de base (111) est en outre configuré pour :

- configurer l'UE (130) pour qu'il fonctionne avec au moins une des classes de puissance d'UE supportées par l'UE (130).

**28.** Station de base (111) selon l'une quelconque des revendications 20 à 27, dans laquelle la plage respective de valeurs de la marge de puissance configurée pour être indiquée par la valeur rapportable configurée pour être reçue est configurée pour comprendre une marge de puissance mesurée.

**29.** UE (130) configuré pour :

- obtenir une configuration de rapport pour rapporter une marge de puissance à une station de base (111), dans laquelle la configuration de rapport comprend une pluralité de valeurs rapportables, dans laquelle chaque valeur rapportable est configurée pour correspondre à une plage respective de valeurs d'une marge de puissance,

**caractérisé en ce que**

la plage respective de valeurs de la marge de puissance à laquelle chaque valeur rapportable correspond, est configurée pour être une fonction d'une classe de puissance de l'UE (130), et
l'UE est en outre configuré pour :

- transmettre, à la station de base (111), une valeur rapportable parmi la pluralité de valeurs rapportables.

**30.** UE (130) selon la revendication 29, dans lequel la configuration de rapport comprend une résolution de rapport, et dans lequel la résolution de rapport est configurée pour être adaptée en fonction de la classe de puissance de l'UE (130).

**31.** UE (130) selon l'une quelconque des revendications 29 à 30, dans lequel l'obtention de la configuration de rapport pour rapporter la marge de puissance est configuré pour comprendre en outre la détermination de la classe de puissance de l'UE (130) et l'association de la classe de puissance de l'UE (130) configuré pour être déterminé, avec la configuration de rapport pour rapporter la marge de puissance.

**32.** UE (130) selon l'une quelconque des revendications 29 à 31, dans lequel la configuration de rapport est en outre configurée pour être basée sur un niveau de couverture dans lequel se trouve l'UE (130).

**33.** UE (130) selon l'une quelconque des revendications 29 à 32, dans lequel la classe de puissance de l'UE (130) est de 14 dBm.

**34.** UE (130) selon l'une quelconque des revendications 29 à 33, étant en outre configuré pour :

- obtenir une information de capacité de l'UE (130) configurée pour indiquer l'un parmi :

a. que l'UE (130) est capable de supporter au moins deux classes de puissance d'UE,
b. que l'UE (130) est capable de supporter une classe de puissance de 14 dBm, et
c. une configuration de la station de base (111) pour fonctionner avec l'une des au moins deux classes de puissance d'UE supportées par l'UE (130) .

**35.** UE (130) selon l'une quelconque des revendications 29 à 34, l'UE (130) étant en outre configuré pour :

- exécuter, sur la base de la configuration de rapport configurée pour être déterminée, au moins une mesure radio sur des signaux configurés pour être reçus depuis et/ou configuré pour être transmis à un nœud.

**a)**

100

**b)**

100

# Figure 1

Start

201. Obtain the capability information

202. Configure the UE to operate with at least one power class

203. Determine the reporting configuration

204. Receive the reportable value

205. Use the received reportable value

End

# Figure 2

Start

301. Obtain the capability information

302. Obtain the reporting configuration

303. Perform at least one radio measurement

304. Transmit the reportable value

End

# Figure 3

**a)**

```
┌──────────────────────────────────────────────────────┐
│   ┌ ─ ─ ─ ─ ─ ─ ─ ─ ─ ─ ─ ─ ─ ─ ─ ─ ─ ─ ─ ─ ┐        │
│     430 Communication unit                            │
│   └ ─ ─ ─ ─ ─ ─ ─ ─ ─ ─ ─ ─ ─ ─ ─ ─ ─ ─ ─ ─ ┘        │
│   ┌ ─ ─ ─ ─ ─ ─ ─ ─ ─ ─ ─ ─ ─ ─ ─ ─ ┐                │
│     420 Processing means                              │
│     ┌──────────────────────────┐     │     ┌───────┐  │
│     │ 421 Processor            │           │Memory │  │
│     └──────────────────────────┘     │     └───────┘  │
│                                                 410    │
│     ┌──────────────────────────┐     │                │
│     │ 422 Memory               │                       │
│     │   ┌──────────────────┐   │     │                │
│     │   │ 423 Computer      │  │                       │
│     │   │ program           │  │     │                │
│     │   └──────────────────┘   │                       │
│     └──────────────────────────┘     │                │
│   └ ─ ─ ─ ─ ─ ─ ─ ─ ─ ─ ─ ─ ─ ─ ─ ─ ┘                │
│                                       ┌ ─ ─ ─ ─ ─ ─ ┐  │
│   130 UE                                440 Further    │
│                                         functionality  │
│                                       └ ─ ─ ─ ─ ─ ─ ┘  │
└──────────────────────────────────────────────────────┘
```

**b)**

```
┌──────────────────────────────────────────────────────┐
│   130 UE            │ 451                 │            │
│                     │ Communication unit  │            │
│                     └ ─ ─ ─ ─ ─ ─ ─ ─ ─ ─ ┘            │
│                                                        │
│   ┌──────────────────────┐      ┌ ─ ─ ─ ─ ┐           │
│   │ 441 Obtaining unit    │       Memory             │
│   └──────────────────────┘      └ ─ ─ ─ ─ ┘           │
│   ┌──────────────────────┐           452              │
│   │ 442 Reporting unit    │                           │
│   └──────────────────────┘                            │
│   ┌──────────────────────┐                            │
│   │ 443 Determining unit  │      ┌ ─ ─ ─ ─ ─ ─ ┐      │
│   └──────────────────────┘        459 Further         │
│   ┌──────────────────────┐        functionality       │
│   │ 444 Performing unit   │      └ ─ ─ ─ ─ ─ ─ ┘      │
│   └──────────────────────┘                            │
└──────────────────────────────────────────────────────┘
```

# Figure 4

40

**530** Communication unit

**520** Processing means

**521** Processor

**522** Memory

**523** Computer program

Memory

510

**111** Base station

**540** Further functionality

# Figure 5

**111** Base station | **604** Communication unit

**601** Determining unit

**602** Receiving unit

**603** Obtaining unit

Memory

605

**606** Further functionality

# Figure 6

**Figure 7**

**Figure 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ERICSSON.** RRM requirements for Rel-13 MTC due to new UE power class. *R4-156309, Sophia Antipolis, France,* 12 October 2015
- **HUAWEI.** Correction of power headroom report mapping. *R4-103610, Xian,* 11 October 2010

- **ERICSSON.** Further reduced power class in NB-IoT. *R2-165157, Gothenburg, Sweden,* 22 August 2016